(19) Europäisches Patentamt
European Patent Office
Office européen des brevets

(11) **EP 4 426 024 A1**

(12) **EUROPEAN PATENT APPLICATION**
published in accordance with Art. 153(4) EPC

(43) Date of publication:
**04.09.2024 Bulletin 2024/36**

(21) Application number: **22894926.9**

(22) Date of filing: **17.11.2022**

(51) International Patent Classification (IPC):
**H04W 64/00** (2009.01)

(52) Cooperative Patent Classification (CPC):
**H04W 64/00**

(86) International application number:
**PCT/CN2022/132679**

(87) International publication number:
**WO 2023/088396 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2021 CN 202111367563**

(71) Applicant: **Huawei Technologies Co., Ltd.
Shenzhen, Guangdong 518129 (CN)**

(72) Inventors:
• **WU, Yiqun
  Shenzhen, Guangdong 518129 (CN)**
• **SUN, Yaqi
  Shenzhen, Guangdong 518129 (CN)**
• **SUN, Yan
  Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS**

(57) A communication method and an apparatus are provided. The method includes: A terminal device (or an access network device) obtains a channel feature through inference by using a channel feature extraction model, where the channel feature corresponds to a channel between the terminal device and the access network device. The terminal device (or the access network device) sends the channel feature to a location management function LMF. The LMF obtains, based on the channel feature, positioning information of the terminal device through inference by using a positioning information obtaining model. The LMF may determine location information of the terminal device based on the positioning information. According to the method, an artificial intelligence model may be used to implement positioning or assist in implementing positioning of the terminal device.

FIG. 6

**Description**

This application claims priority to Chinese Patent Application No. 202111367563.0, filed with the China National Intellectual Property Administration on November 18, 2021 and entitled "COMMUNICATION METHOD AND APPARATUS", which is incorporated herein by reference in its entirety.

**TECHNICAL FIELD**

This application relates to the field of communication technologies, and in particular, to a positioning method and an apparatus.

**BACKGROUND**

In a communication system, a positioning technology can be used to obtain location information of a mobile terminal. For example, the positioning technology may be applied to fields such as navigation and aviation, plotting and disaster relief, vehicle navigation, logistics information query, or traffic management. With development of mobile communication, a positioning technology based on a wireless cellular network is widely applied. In the wireless cellular network, for example, a 4th generation (4th generation, 4G) or a 5th generation (5th generation, 5G) mobile communication network, the positioning technology for the mobile terminal is widely researched. How to improve positioning efficiency of the mobile terminal is a technical problem worth studying.

**SUMMARY**

This application provides a communication method and an apparatus, and in particular, relates to a terminal device positioning method. In the method, a terminal device (or an access network device) and a location management function (location management function, LMF) use a channel feature extraction model and a positioning information obtaining model in a matched manner, so that intelligent positioning of the terminal device can be implemented.

According to a first aspect, a communication method is provided, and may be implemented on a terminal device side. The method includes: sending X channel features to an LMF, where the X channel features correspond to Y channels of a terminal device, the X channel features are obtained by using a channel feature extraction model, an input of the channel feature extraction model is determined based on Y channel responses, the Y channel responses are in one-to-one correspondence with the Y channels, and X and Y are integers greater than or equal to 1.

Optionally, the Y channels are Y channels between the terminal device and P access network devices. Optionally, there are E channels between each of the P access network devices and the terminal device, and E is an integer greater than or equal to 1. Optionally, when E is greater than 1, different channels in the E channels correspond to one or a combination of different cells, different transmission reception points (transmit receive point, TRP), different antenna panels, different antennas, different beams, or different frequency bands.

In the method, the channel feature sent to the LMF may be used to implement positioning or assist in implementing positioning of the terminal device. In this case, in the method, an artificial intelligence model may be used to resolve a positioning problem of the terminal device, thereby improving positioning efficiency. For example, in comparison with a conventional deterministic algorithm for calculating location information of the terminal device, the artificial intelligence model is obtained through training by using actual channel data. In the foregoing method, when artificial intelligence is used to implement the positioning or assist in implementing the positioning of the terminal device, the positioning is closer to an actual channel environment. Therefore, the positioning of the terminal device by using the model is more accurate.

In a possible implementation, X is less than or equal to Y, and/or a total dimension of the X channel features is less than a total dimension of the Y channel responses.

According to the method, signaling overheads between the LMF and the terminal device can be reduced.

In a possible implementation, the X channel features are used to determine an input of a positioning information obtaining model, and an output of the positioning information obtaining model includes positioning information of the terminal device.

According to the method, the LMF can obtain the positioning information of the terminal device by using the X channel features and the positioning information obtaining model, so that the intelligent positioning of the terminal device can be implemented, and the positioning efficiency is improved.

In a possible implementation, the positioning information indicates location information of the terminal device.

In a possible implementation, the location information of the terminal device includes at least one of the following: a longitude of a location of the terminal device, a latitude of the location of the terminal device, an altitude of the location of the terminal device, an offset of the location of the terminal device relative to a reference location (for example, a location of a reference access network device or a location of a reference building), or the like.

According to the method, the location information of the terminal device is directly obtained through model inference, so that the positioning of the terminal device is simpler and more convenient.

In a possible implementation, the positioning information indicates at least one of the following of the Y channels: a channel type, a first path location, or a relative azimuth of the terminal device.

Optionally, the channel type includes line of sight (line of sight, LOS) or non-line of sight (non-line of sight, NLOS).

Optionally, the first path location includes a time domain location of a first path in a channel in one OFDM symbol.

Optionally, for each of the Y channels, the relative azimuth of the terminal device indicates a relative location between the terminal device and an access network device corresponding to the channel. Optionally, the relative azimuth includes at least one of the following: an angle of arrival (angle of arrival, AoA) or an angle of departure (angle of departure, AOD) of a reference signal on the channel. Optionally, the reference signal is a reference signal that is on the channel and that is sent by the terminal device to the access network device.

The positioning information is used to determine the location information of the terminal device. According to the method, the LMF can obtain the positioning information of the terminal device by using a simpler and more convenient model, to assist in implementing the positioning the terminal device.

In a possible implementation, the method includes: receiving information about the channel feature extraction model. Optionally, the information about the channel feature extraction model is received from the LMF, or the information about the channel feature extraction model is received from an artificial intelligence (artificial intelligence, AI) function network element.

According to the method, online training of the channel feature extraction model can be implemented, so that the terminal device obtains the channel feature extraction model that better matches a current channel condition, thereby improving positioning accuracy.

In a possible implementation, the method includes: determining the channel feature extraction model based on a first reference model, where the first reference model includes a first reference channel feature extraction model and a first reference positioning information obtaining model.

In a possible implementation, when the channel feature extraction model and the first reference positioning information obtaining model are used in a matched manner, a value of a loss function is less than or less than or equal to a first threshold.

According to the method, the terminal device can obtain the channel feature extraction model through training by using the first reference model. In this way, a quantity of training iterations can be reduced, and the channel feature extraction model obtained through training can better match the current channel condition, so that fast, simple, and convenient intelligent positioning can be implemented.

According to a second aspect, a communication method is provided, and may be implemented on an access network device side. The method includes: sending E channel features to a location management function LMF, where E is an integer greater than or equal to 1, the E channel features correspond to E channels of a terminal device, each of the E channel features is obtained by using a channel feature extraction model, an input of the channel feature extraction model is determined based on a channel response, and the channel response corresponds to a channel corresponding to the channel feature.

In a possible implementation, a dimension of the channel feature is less than a dimension of the channel response.

In a possible implementation, the E channel features are used to determine an input of a positioning information obtaining model, and an output of the positioning information obtaining model includes positioning information of the terminal device.

For descriptions of the positioning information, refer to the first aspect. Details are not described herein again.

In a possible implementation, the method includes: receiving information about the channel feature extraction model. Optionally, the information about the channel feature extraction model is received from the LMF, or the information about the channel feature extraction model is received from an AI function network element.

In a possible implementation, the method includes: determining the channel feature extraction model based on a first reference model, where the first reference model includes a first reference channel feature extraction model and a first reference positioning information obtaining model.

In a possible implementation, when the channel feature extraction model and the first reference positioning information obtaining model are used in a matched manner, a value of a loss function is less than or less than or equal to a first threshold.

According to a third aspect, a communication method is provided, and may be implemented on an AI function network element side. The method includes: receiving X channel features, where the X channel features correspond to Y channels of a terminal device, and X and Y are positive integers greater than or equal to 1; and obtaining positioning information of the terminal device based on the X channel features and a positioning information obtaining model.

Optionally, the X channel features are received from the terminal device. Optionally, the X channel features are received from P access network devices. For further descriptions of the channel feature, refer to the first aspect or the second aspect. Details are not described herein again.

For descriptions of the positioning information, refer to the first aspect. Details are not described herein again.

In a possible implementation, X is less than or equal to Y, and/or a total dimension of the X channel features is less than a total dimension of the Y channel responses.

In a possible implementation, the positioning information obtaining model is determined based on a first reference model, where the first reference model includes a first reference channel feature extraction model and a first reference positioning information obtaining model.

In a possible implementation, when the positioning information obtaining model and the first reference channel feature extraction model are used in a matched manner, a value of a loss function is less than or less than or equal to a first threshold.

According to a fourth aspect, a communication method is provided, and may be implemented on an AI function network element side. The method includes: receiving a training data set, where each piece of training data in the training data set indicates Y channel responses and Y pieces of positioning information of Y channels of a terminal device, and the Y channel responses are in one-to-one correspondence with the Y pieces of positioning information; and obtaining a channel feature extraction model and a positioning information obtaining model through training based on the training data set, where an input of the channel feature extraction model is determined based on at least one of the Y channel responses, and an input of the positioning information obtaining model is determined based on an output of the channel feature extraction model.

In a possible implementation, a loss function between an output of the positioning information obtaining model and at least one piece of positioning information corresponding to the at least one channel response is less than or less than or equal to a threshold.

In a possible implementation, the channel feature extraction model is sent to the terminal device, an access network device, or an LMF.

In a possible implementation, the positioning information obtaining model is sent to the LMF.

According to a fifth aspect, an apparatus is provided. The apparatus is configured to implement the method according to the first aspect. The apparatus may be a terminal device, or an apparatus disposed in the terminal device, or an apparatus that can be used with the terminal device in a matched manner. In a design, the apparatus includes units in one-to-one correspondence with and configured to perform the method/operations/steps/actions described in the first aspect. The units may be implemented by hardware circuits, software, or hardware circuits in combination with software.

For example, the apparatus may include a processing unit and a communication unit, and the processing unit and the communication unit may perform corresponding functions in the first aspect. For example:

The communication unit is configured to send X channel features to an LMF, where the X channel features correspond to Y channels of the terminal device, the X channel features are obtained by using a channel feature extraction model, an input of the channel feature extraction model is determined based on Y channel responses, the Y channel responses are in one-to-one correspondence with the Y channels, and X and Y are integers greater than or equal to 1. The X channel features are obtained by the processing unit by using the channel feature extraction model.

For descriptions of the Y channels, the X channel features, and the like, refer to the first aspect. Details are not described again.

In a possible implementation, the X channel features are used to determine an input of a positioning information obtaining model, and an output of the positioning information obtaining model includes positioning information of the terminal device.

For descriptions of the positioning information, refer to the first aspect. Details are not described herein again.

In a possible implementation, the communication unit is configured to receive information about the channel feature extraction model. Optionally, the information about the channel feature extraction model is received from the LMF, or the information about the channel feature extraction model is received from an AI function network element.

In a possible implementation, the processing unit is configured to determine the channel feature extraction model based on a first reference model, where the first reference model includes a first reference channel feature extraction model and a first reference positioning information obtaining model.

For example, the apparatus includes a processor, configured to implement the method described in the first aspect. The apparatus may further include a memory, configured to store instructions and/or data. The memory is coupled to the processor. When executing the program instructions stored in the memory, the processor can implement the method described in the first aspect. The apparatus may further include a communication interface, and the communication interface is used by the apparatus to communicate with another device. For example, the communication interface may be a transceiver, a circuit, a bus, a module, a pin, or a communication interface of another type. In a possible design, the apparatus includes:

a memory, configured to store program instructions;
a communication interface; and
a processor, configured to send X channel features to an LMF through the communication interface, where the X channel features correspond to Y channels of the terminal device, the X channel features are obtained by using a channel feature extraction model, an input of the channel feature extraction model is determined based on Y channel responses, the Y channel responses are in one-to-one correspondence with the Y channels, and X and Y are integers greater than or equal to 1.

For descriptions of the Y channels, the X channel features, and the like, refer to the first aspect. Details are not described again.

In a possible implementation, the processor receives information about the channel feature extraction model through the communication interface. Optionally, the information about the channel feature extraction model is received from the LMF, or the information about the channel feature extraction model is received from an AI function network element.

In a possible implementation, the processor is configured to determine the channel feature extraction model based on a first reference model, where the first reference model includes a first reference channel feature extraction model and a first reference positioning information obtaining model.

According to a sixth aspect, an apparatus is provided. The apparatus is configured to implement the method according to the second aspect. The apparatus may be an access network device, or an apparatus disposed in the access network device, or an apparatus that can be used with the access network device in a matched manner. In a design, the apparatus includes units in one-to-one correspondence with and configured to perform the method/operations/steps/actions described in the second aspect. The units may be implemented by hardware circuits, software, or hardware circuits in combination with software.

For example, the apparatus may include a processing unit and a communication unit, and the processing unit and the communication unit may perform corresponding functions in the second aspect. For example:

The communication unit is configured to send E channel features to a location management function LMF, where E is an integer greater than or equal to 1, the E channel features correspond to E channels of a terminal device, each of the E channel features is obtained by using a channel feature extraction model, an input of the channel feature extraction model is determined based on a channel response, and the channel response corresponds to a channel corresponding to the channel feature. The E channel features are obtained by the processing unit by using the channel feature extraction model.

For descriptions of the channel feature, refer to the second aspect. Details are not described again.

In a possible implementation, the communication unit is configured to receive information about the channel feature extraction model. Optionally, the information about the channel feature extraction model is received from the LMF, or the information about the channel feature extraction model is received from an AI function network element.

In a possible implementation, the processing unit is configured to determine the channel feature extraction model based on a first reference model, where the first reference model includes a first reference channel feature extraction model and a first reference positioning information obtaining model.

For example, the apparatus includes a processor, configured to implement the method described in the second aspect. The apparatus may further include a memory, configured to store instructions and/or data. The memory is coupled to the processor. When executing the program instructions stored in the memory, the processor can implement the method described in the second aspect. The apparatus may further include a communication interface, and the communication interface is used by the apparatus to communicate with another device. For example, the communication interface may be a transceiver, a circuit, a bus, a module, a pin, a communication interface of another type, or the like. In a possible design, the apparatus includes:

a memory, configured to store program instructions;
a communication interface; and
a processor, configured to send E channel features to a location management function LMF through the communication interface, where E is an integer greater than or equal to 1, the E channel features correspond to E channels of a terminal device, each of the E channel features is obtained by using a channel feature extraction model, an input of the channel feature extraction model is determined based on a channel response, and the channel response corresponds to a channel corresponding to the channel feature.

For descriptions of the channel feature, refer to the second aspect. Details are not described again.

In a possible implementation, the processor receives information about the channel feature extraction model through the communication interface. Optionally, the information about the channel feature extraction model is received from the LMF, or the information about the channel feature extraction model is received from an AI function network element.

In a possible implementation, the processor is configured to determine the channel feature extraction model based on a first reference model, where the first reference model includes a first reference channel feature extraction model and a first reference positioning information obtaining model.

According to a seventh aspect, an apparatus is provided, to implement the method according to the third aspect. The apparatus may be an LMF, or an apparatus disposed in the LMF, or an apparatus that can be used with the LMF in a matched manner. In a design, the apparatus includes units in one-to-one correspondence with and configured to perform the method/operations/steps/actions described in the third aspect. The units may be implemented by hardware circuits, software, or hardware circuits in combination with software.

For example, the apparatus may include a processing unit and a communication unit, and the processing unit and the communication unit may perform corresponding functions in the third aspect. For example:

The communication unit is configured to receive X channel features, where the X channel features correspond to Y channels of a terminal device, and X and Y are positive integers greater than or equal to 1.

The communication unit is configured to obtain positioning information of the terminal device based on the X channel features and a positioning information obtaining model.

For descriptions of the channel feature, the positioning information, and the like, refer to the third aspect. Details are not described again.

In a possible implementation, the processing unit is configured to determine the positioning information obtaining model based on a first reference model, where the first reference model includes a first reference channel feature extraction model and a first reference positioning information obtaining model.

For example, the apparatus includes a processor, configured to implement the method described in the third aspect. The apparatus may further include a memory, configured to store instructions and/or data. The memory is coupled to the processor. When executing the program instructions stored in the memory, the processor can implement the method described in the third aspect. The apparatus may further include a communication interface, and the communication interface is used by the apparatus to communicate with another device. For example, the communication interface may be a transceiver, a circuit, a bus, a module, a pin, a communication interface of another type, or the like. In a possible design, the apparatus includes:

a memory, configured to store program instructions;
a communication interface; and
a processor, configured to receive X channel features through the communication interface, where the X channel features correspond to Y channels of a terminal device, and X and Y are positive integers greater than or equal to 1.

The processor is configured to obtain positioning information of the terminal device based on the X channel features and a positioning information obtaining model.

For descriptions of the channel feature, the positioning information, and the like, refer to the third aspect. Details are not described again.

In a possible implementation, the processor is configured to determine the positioning information obtaining model based on a first reference model, where the first reference model includes a first reference channel feature extraction model and a first reference positioning information obtaining model.

According to an eighth aspect, an apparatus is provided, to implement the method according to the fourth aspect. The apparatus may be an AI function network element, or an apparatus disposed in the AI function network element, or an apparatus that can be used with the AI function network element in a matched manner. In a design, the apparatus includes units in one-to-one correspondence with and configured to perform the method/operations/steps/actions described in the fourth aspect. The units may be implemented by hardware circuits, software, or hardware circuits in combination with software.

For example, the apparatus may include a processing unit and a communication unit, and the processing unit and the communication unit may perform corresponding functions in the fourth aspect. For example:

The communication unit is configured to receive a training data set, where each piece of training data in the training data set indicates Y channel responses and Y pieces of positioning information of Y channels of a terminal device, and the Y channel responses are in one-to-one correspondence with the Y pieces of positioning information.

The processing unit is configured to obtain a channel feature extraction model and a positioning information obtaining model through training based on the training data set, where an input of the channel feature extraction model is determined based on at least one of the Y channel responses, and an input of the positioning information obtaining model is determined based on an output of the channel feature extraction model.

In a possible implementation, the communication unit is configured to send the channel feature extraction model to the terminal device, an access network device, or an LMF.

In a possible implementation, the communication unit is configured to send the positioning information obtaining model to the LMF.

For example, the apparatus includes a processor, configured to implement the method described in the fourth aspect. The apparatus may further include a memory, configured to store instructions and/or data. The memory is coupled to the processor. When executing the program instructions stored in the memory, the processor can implement the method described in the fourth aspect. The apparatus may further include a communication interface, and the communication interface is used by the apparatus to communicate with another device. For example, the communication interface may be a transceiver, a circuit, a bus, a module, a pin, a communication interface of another type, or the like. In a possible design, the apparatus includes:

a memory, configured to store program instructions;

a communication interface; and

a processor, configured to receive a training data set through the communication interface, where each piece of training data in the training data set indicates Y channel responses and Y pieces of positioning information of Y channels of a terminal device, and the Y channel responses are in one-to-one correspondence with the Y pieces of positioning information.

The processor is configured to obtain a channel feature extraction model and a positioning information obtaining model through training based on the training data set, where an input of the channel feature extraction model is determined based on at least one of the Y channel responses, and an input of the positioning information obtaining model is determined based on an output of the channel feature extraction model.

In a possible implementation, the processor sends the channel feature extraction model to the terminal device, an access network device, or an LMF through the communication interface.

In a possible implementation, the processor sends the positioning information obtaining model to the LMF through the communication interface.

According to a ninth aspect, a communication system is provided, including:

the apparatus according to the fifth aspect and the apparatus according to the seventh aspect;

the apparatus according to the sixth aspect and the apparatus according to the seventh aspect;

the apparatus according to the fifth aspect and the apparatus according to the eighth aspect;

the apparatus according to the sixth aspect and the apparatus according to the eighth aspect;

the apparatus according to the fifth aspect, the apparatus according to the seventh aspect, and the apparatus according to the eighth aspect;

the apparatus according to the sixth aspect, the apparatus according to the seventh aspect, and the apparatus according to the eighth aspect; or

the apparatus according to the fifth aspect, the apparatus according to the sixth aspect, the apparatus according to the seventh aspect, and the apparatus according to the eighth aspect.

According to a tenth aspect, a computer-readable storage medium is provided, including instructions. When the instructions are run on a computer, the computer is enabled to perform the method according to the first aspect, the second aspect, the third aspect, or the fourth aspect.

According to an eleventh aspect, a computer program product is provided, including instructions. When the instructions are run on a computer, the computer is enabled to perform the method according to the first aspect, the second aspect, the third aspect, or the fourth aspect.

According to a twelfth aspect, a chip system is provided. The chip system includes a processor, and may further include a memory. The chip system is configured to implement the method according to the first aspect, the second aspect, the third aspect, or the fourth aspect. The chip system may include a chip, or may include a chip and another discrete component.

**BRIEF DESCRIPTION OF DRAWINGS**

FIG. 1 is a schematic of an architecture of a communication system according to the present disclosure;

FIG. 2 is a schematic of a layer relationship of a neural network according to the present disclosure;

FIG. 3A to FIG. 3E are schematics of network architectures according to the present disclosure;

FIG. 4, FIG. 6, FIG. 12, FIG. 13, and FIG. 15 are schematic flowcharts of positioning methods according to the present disclosure;

FIG. 5A and FIG. 5B are schematics of system architectures according to the present disclosure;

FIG. 7A and FIG. 7B are schematics of reference signal transmission between a UE and a base station according to present disclosure;

FIG. 8A, FIG. 8B, FIG. 8C, FIG. 14A, and FIG. 14B are schematics of model training structures according to the present disclosure;

FIG. 9A, FIG. 9B, and FIG. 9C are schematics of model application structures according to the present disclosure;

FIG. 10 is an example diagram of estimating a location of a UE according to the present disclosure;

FIG. 11 is a schematic of a channel type according to the present disclosure; and

FIG. 16 and FIG. 17 are schematics of structures of apparatuses according to the present disclosure.

## DESCRIPTION OF EMBODIMENTS

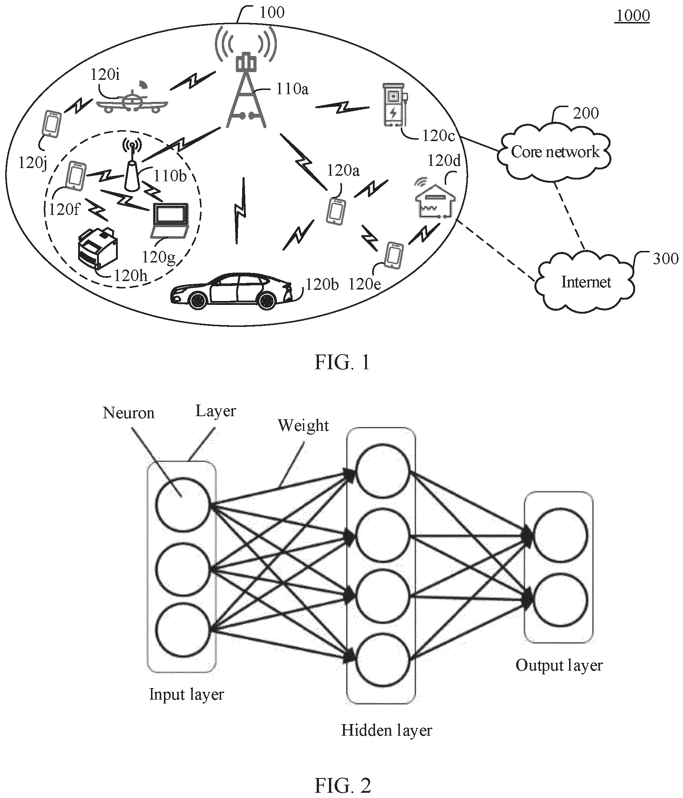

FIG. 1 is a schematic of an architecture of a communication system 1000 to which the present disclosure can be applied. As shown in FIG. 1, the communication system includes a radio access network (radio access network, RAN) 100 and a core network (core network, CN) 200. Optionally, the communication system 1000 may further include the internet 300. The radio access network 100 may include at least one access network device (or may be referred to as a RAN device, for example, 110a and 110b in FIG. 1), and may further include at least one terminal (for example, 120a to 120j in FIG. 1). The terminal is connected to the access network device in a wireless manner. The access network device is connected to the core network in a wireless or wired manner. A core network device and the access network device may be different physical devices independent of each other; or may be a same physical device that integrates a function of the core network device and a function of the access network device; or may be another possible case. For example, one physical device may integrate a function of the access network device and a part of functions of the core network device, and the other physical device implements the remaining part of the functions of the core network device. Physical existence forms of the core network device and the access network device are not limited in the present disclosure. The terminal may be connected to another terminal in a wired or wireless manner. The access network device may be connected to another access network device in a wired or wireless manner. FIG. 1 is merely a schematic, and is not intended to limit the present disclosure. For example, the communication system may further include another network device, for example, may further include a wireless relay device, a wireless backhaul device, and the like.

The access network device may be a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or a unit that completes a part of functions of the access network device, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in the present disclosure. The 5G system may also be referred to as a new radio (new radio, NR) system.

In the present disclosure, an apparatus configured to implement the function of the access network device may be an access network device, or may be an apparatus that can support the access network device in implementing the function, for example, a chip system, a hardware circuit, a software module, or a hardware circuit plus a software module. The apparatus may be installed in the access network device or may be used with the access network device in a matched manner. In the present disclosure, the chip system may include a chip, or may include a chip and another discrete component. For ease of description, the following describes the provided technical solutions by using an example in which the apparatus configured to implement the function of the access network device is an access network device and the access network device is a base station.

(1) Protocol layer structure.

Communication between the access network device and a terminal complies with a protocol layer structure. For example, the protocol layer structure may include a control plane protocol layer structure and a user plane protocol layer structure. For example, the control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, and the like. For example, the user plane protocol layer structure may include the PDCP layer, the RLC layer, the MAC layer, the physical layer, and the like. In a possible implementation, there may further be a service data adaptation protocol (service data adaptation protocol, SDAP) layer above the PDCP layer.

Optionally, the protocol layer structure between the access network device and the terminal may further include an artificial intelligence (artificial intelligence, AI) layer, used for transmission of data related to an AI function.

The protocol layer structure between the access network device and the terminal may be considered as an access stratum (access stratum, AS) structure. Optionally, above the AS, a non-access stratum (non-access stratum, NAS) layer may further exist, and the non-access stratum layer is used by the access network device to forward information from the core network device to the terminal, or is used by the access network device to forward information from the terminal to the core network device. In this case, it may be considered that there is a logical interface between the terminal and the core network device. Optionally, the access network device may forward information between the terminal and the core network device in a transparent transmission manner. For example, NAS signaling/a NAS message may be mapped to or included in RRC signaling as an element of the RRC signaling.

(2) Central unit (central unit, CU) and distributed unit (distributed unit, DU).

The access network device may include a CU and a DU. This design may be referred to as CU-DU split. A plurality of DUs may be controlled by one CU in a centralized manner. For example, an interface between the CU and the DU is referred to as an F1 interface. A control plane (control panel, CP) interface may be F1-C, and a user plane (user panel, UP) interface may be F1-U. Specific names of the interfaces are not limited in the present disclosure. The CU and the DU may be obtained through division based on protocol layers of a wireless network. For example, functions of the PDCP layer and protocol layers above the PDCP layer (for example, the RRC layer and the SDAP layer) are allocated to the CU, and functions of protocol layers below the PDCP layer (for example, the RLC layer, the MAC layer, and the PHY layer) are allocated to the DU. For another example, functions of protocol layers above the PDCP layer are allocated to the CU, and functions of protocol layers below the PDCP layer allocated to the DU. This is not limited.

The foregoing allocation of processing functions of the CU and the DU based on the protocol layers is merely an example, and another allocation manner may alternatively be used. For example, the CU or the DU may be obtained through division to have more functions of the protocol layers. For another example, the CU or the DU is obtained through division to have a part of the processing functions of the protocol layers. For example, a part of functions of the RLC layer and functions of protocol layers above the RLC layer are allocated to the CU, and the remaining part of the functions of the RLC layer and functions of protocol layers below the RLC layer are allocated to the DU. For another example, the functions of the CU or the DU may be allocated based on a service type or another system requirement, for example, allocated based on a delay. A function whose processing time needs to meet a delay requirement is allocated to the DU, and a function whose processing time does not need to meet the delay requirement is allocated to the CU.

Optionally, the CU may have one or more functions of a core network. For example, the CU may be disposed on a network side to facilitate centralized management. Optionally, a radio unit (radio unit, RU) of the DU is disposed remotely, where the RU has a radio frequency function.

For example, functions of the PHY layer may be allocated to the DU and the RU. For example, the DU may implement a higher-layer function of the PHY layer, and the RU may implement a lower-layer function of the PHY layer. When the PHY layer is used for sending, a function of the PHY layer may include at least one of the following functions: cyclic redundancy check (cyclic redundancy check, CRC) bit addition, channel coding, rate matching, scrambling, modulation, layer mapping, precoding, resource mapping, physical antenna mapping, or radio frequency sending. When the PHY layer is used for receiving, a function of the PHY layer may include at least one of the following functions: CRC check, channel decoding, de-rate matching, descrambling, demodulation, de-layer mapping, channel detection, resource demapping, physical antenna demapping, or radio frequency receiving. The higher-layer function of the PHY layer may include a part of the functions of the PHY layer, and the part of the functions are closer to the MAC layer. The lower-layer function of the PHY layer may include another part of the functions of the PHY layer, for example, the another part of the functions are closer to the radio frequency function. For example, the higher-layer function of the PHY layer may include CRC bit addition, channel coding, rate matching, scrambling, modulation, and layer mapping, and the lower-layer function of the PHY layer may include precoding, resource mapping, physical antenna mapping, and radio frequency sending. Alternatively, the higher-layer function of the PHY layer may include CRC bit addition, channel coding, rate matching, scrambling, modulation, layer mapping, and precoding, and the lower-layer function of the PHY layer may include resource mapping, physical antenna mapping, and radio frequency sending. For example, the higher-layer function of the PHY layer may include CRC check, channel decoding, de-rate matching, decoding, demodulation, and de-layer mapping, and the lower-layer function of the PHY layer may include channel detection, resource demapping, physical antenna demapping, and radio frequency receiving. Alternatively, the higher-layer function of the PHY layer may include CRC check, channel decoding, de-rate matching, decoding, demodulation, de-layer mapping, and channel detection, and the lower-layer function of the PHY layer may include resource demapping, physical antenna demapping, and radio frequency receiving.

Optionally, the functions of the CU may be implemented by one entity, or may be implemented by different entities. For example, the functions of the CU may be further allocated, so that a control plane and a user plane are split and implemented by different entities. The split entities are respectively a control plane CU entity (namely, a CU-CP entity) and a user plane CU entity (namely, a CU-UP entity). The CU-CP entity and the CU-UP entity may be coupled to the DU to jointly complete a function of the access network device. In the present disclosure, an entity may be understood as a module or a unit, and an existence form of the entity may be a hardware structure, a software module, or a hardware structure plus a software module. This is not limited.

Optionally, any one of the DU, the CU, the CU-CP, the CU-UP, and the RU may be a software module, a hardware structure, or a software module plus a hardware structure. This is not limited. Different entities may have a same existence form or may have different existence forms. For example, the DU, the CU, the CU-CP, and the CU-UP are software modules, and the RU is a hardware structure. For brevity of description, other possible combinations are not enumerated herein. These modules and methods performed by these modules also fall within the protection scope of the present disclosure. For example, when the method according to the present disclosure is performed by the access network device, the method may be specifically performed by the CU, the DU, or a near-real-time RIC described below.

The terminal may also be referred to as a terminal device, a user equipment (user equipment, UE), a mobile station, a mobile terminal, or the like. The terminal may be widely used in various scenarios for communication. For example, the scenario includes but is not limited to at least one of the following: enhanced mobile broadband (enhanced mobile broadband, eMBB), ultra-reliable low-latency communication (ultra-reliable low-latency communication, URLLC), massive machine-type communication (massive machine-type communication, mMTC), device-to-device (device-to-device, D2D), vehicle-to-everything (vehicle-to-everything, V2X), machine-type communication (machine-type communication, MTC), internet of things (internet of things, IOT), virtual reality, augmented reality, industrial control, autonomous driving, telemedicine, smart grid, smart furniture, smart office, smart wearable, intelligent transportation, smart city, or the like. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in the present disclosure.

In the present disclosure, an apparatus configured to implement a function of the terminal may be a terminal, or may be an apparatus that can support the terminal device in implementing the function, for example, a chip system, a hardware circuit, a software module, or a hardware circuit plus a software module. The apparatus may be installed in the terminal or may be used with the terminal in a matched manner. For ease of description, the following describes the technical solutions provided in the present disclosure by using an example in which the apparatus configured to implement the function of the terminal is a terminal, and optionally, by using an example in which the terminal is a UE.

A base station and/or the terminal may be at a fixed position, or may be movable. The base station and/or the terminal may be deployed on land, indoor or outdoor, or may be handheld or vehicle-mounted; or may be deployed on the water; or may be deployed on an airplane, a balloon, or a satellite in the air. An environment/a scenario for the base station and the terminal is not limited in this application. The base station and the terminal may be deployed in a same environment/scenario or different environments/scenarios. For example, the base station and the terminal are both deployed on land. Alternatively, the base station is deployed on land, and the terminal is deployed on the water. Examples are not provided one by one.

Roles of the base station and the terminal may be relative. For example, the helicopter or uncrewed aerial vehicle 120i in FIG. 1 may be configured as a mobile base station. For the terminal 120j that accesses the radio access network 100 by using 120i, the terminal 120i is a base station. For the base station 110a, 120i may be a terminal, in other words, 110a and 120i may communicate with each other according to a wireless air interface protocol. Alternatively, 110a and 120i communicate with each other according to an interface protocol between base stations. In this case, for 110a, 120i is also a base station. Therefore, the base station and the terminal may be collectively referred to as communication apparatuses (or communication devices). 110a and 110b in FIG. 1 may be referred to as communication apparatuses having a base station function, and 120a to 120j in FIG. 1 may be referred to as communication apparatuses having a terminal function.

Communication may be performed between the base station and the terminal, between base stations, or between terminals by using either a licensed spectrum or an unlicensed spectrum, or may be performed by using both a licensed spectrum and an unlicensed spectrum. Communication may be performed by using a spectrum below 6 gigahertz (gigahertz, GHz) or a spectrum above 6 GHz, or may be performed by using both a spectrum below 6 GHz and a spectrum above 6 GHz. A spectrum resource used for wireless communication is not limited in the present disclosure.

The core network 200 may include one or more core network elements. 5G is used as an example, the core network may include at least one of the following network elements: an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a location management function (location management function, LMF) network element, or the like. These core network elements may be hardware structures, software modules, or hardware structures plus software modules. Implementation forms of different network elements may be the same, or may be different. This is not limited. Different core network elements may be different physical devices (or may be referred to as core network devices), or a plurality of different core network elements may be integrated into one physical device, in other words, the physical device has functions of the plurality of core network elements.

In the present disclosure, an apparatus configured to implement the function of the core network device may be a core network device, or may be an apparatus that can support the core network device in implementing the function, for example, a chip system, a hardware circuit, a software module, or a hardware circuit plus a software module. The apparatus may be installed in the core network device or may be used with the core network device in a matched manner. In the present disclosure, an example in which the apparatus configured to implement the function of the core network device is a core network device is used to describe the technical solutions provided in the present disclosure.

In a communication system, a positioning technology for a mobile terminal may be implemented. The positioning technology is used to obtain location information of the mobile terminal. The positioning technology may be applied to fields such as navigation and aviation, plotting and disaster relief, vehicle navigation, logistics information query, or traffic management. With the development of mobile communication, a positioning technology based on a wireless cellular network is widely applied. In the wireless cellular network, for example, a 4th generation (4th generation, 4G) or a 5G mobile communication network, the positioning technology for the mobile terminal is widely researched. The 4G system includes a long term evolution (long term evolution, LTE) system.

To improve positioning efficiency, so that a system can intelligently implement or assist in implementing a positioning function, the present disclosure introduces an artificial intelligence (artificial intelligence, AI) technology for the positioning function.

Artificial intelligence can empower a machine with human intelligence. For example, the machine can simulate some intelligent human behavior by using computer software and hardware. To implement artificial intelligence, a machine learning method or another method may be used. This is not limited. In the machine learning method, a machine obtains a model (or referred to as a rule) through learning or training by using training data, and uses the model to perform inference or prediction. An inference result or a prediction result can be used to resolve a practical problem. The machine learning method includes but is not limited to at least one of the following: a neural network (neural network, NN), a decision tree, a random forest, a linear model, a Bayesian classifier, a probabilistic graphical model, a support vector machine (support vector machine, SVM), or the like.

The neural network is used as an example. According to the universal approximation theorem, the neural network can approximate any continuous function in theory, so that the neural network has the capability of learning any mapping. Therefore, the neural network can accurately perform abstract modeling on a complex high-dimensional problem. The idea of the neural network comes from a neuron structure of brain tissue. Each neuron performs a weighted summation operation on an input value of the neuron, and outputs a result of the weighted summation through an activation function. It is assumed that an input of the neuron is $x = [x_0, ..., x_n]$, a weight corresponding to the input is $w = [w_0, ..., w_n]$, and an offset of a weighted sum is b. Forms of the activation function may be diversified. If the activation function of a neuron is $y = f(z) = \max(0, z)$, an output of the neuron is

$$y = f\left(\sum_{i=0}^{i=n} w_i * x_i + b\right) = \max(0, \sum_{i=0}^{i=n} w_i * x_i + b).$$ For another example, if the activation function of a neuron is $y = f(z) = z$, an output of the neuron is $y = f\left(\sum_{i=0}^{i=n} w_i * x_i + b\right) = \sum_{i=0}^{i=n} w_i * x_i + b$. An element $x_i$ in the input x of the neuron, an element $w_i$ of the weight w, or the offset b may have various possible values such as a decimal, an integer (including 0, a positive integer, a negative integer, or the like), or a complex number. For example, b is equal to 0. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for a complex system. The depth of the neural network indicates a quantity of layers included in the neural network, and a quantity of neurons included in each layer may be referred to as the width of the layer. FIG. 2 is an example diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. The input layer of the neural network performs neuron processing on a received input, and then transfers a result to an intermediate hidden layer. The hidden layer then transfers a calculation result to the output layer or an adjacent hidden layer. Finally, the output layer obtains an output result of the neural network. One neural network may include one or more hidden layers that are sequentially connected. This is not limited.

In a model training process of machine learning, a loss function may be defined. The loss function describes a difference between an output value of a model and an ideal target value. A specific form of the loss function is not limited in the present disclosure. The model training process is a process of adjusting a part of or all parameters of the model, so that a value of the loss function is less than a threshold or meets a target requirement. For example, in a training process of a neural network, one or more of the following parameters may be adjusted: a quantity of layers of the neural network, a neural network width, a connection relationship between layers, a weight of a part of or all neurons, an activation function of the part of or all the neurons, an offset in the activation function, or the like, so that a difference between an output of the neural network and an ideal target value is as small as possible or is less than a threshold. The neural network may be considered as a model.

In the present disclosure, the model may also be referred to as an AI model. The AI model may be considered as a specific method for implementing an AI function. The AI model represents a mapping relationship or a function model between an input and an output of the model. The AI function may include at least one of the following: data collection, model training (or model learning), model information release, model testing, model inference (or referred to as model inference, inference, prediction, or the like), model monitoring or model checking, inference result release, or the like. The AI function may also be referred to as an AI (related) operation.

In the present disclosure, an independent network element (which is referred to as, for example, an AI network element, an AI node, or an AI device) may be introduced into the communication system shown in FIG. 1, to implement a part of or all AI-related operations or functions. The AI network element may be directly connected to a base station, or may be indirectly connected to a base station through a third-party network element. Optionally, the third-party network element may be a core network element, for example, an AMF network element or a UPF network element. Alternatively, an AI entity may be disposed in another network element in the communication system to implement an AI-related operation or function. The AI entity may also be referred to as an AI module, an AI unit, or another name, and is mainly configured to implement a part of or all AI functions. A specific name of the AI entity is not limited in the present disclosure. Optionally, the another network element may be a base station, a core network element, an operation, administration, and maintenance (operation, administration, and maintenance, OAM) device, or the like. In this case, a network element that performs the AI-related operation is a network element with a built-in AI function. Both the AI network element and the AI entity implement the AI-related function. For ease of description, the AI network element and the network element with the built-in AI function are collectively described as an AI function network element in the following.

In the present disclosure, the OAM is configured for operation, management, and/or maintenance of a core network device (an operation, administration, and maintenance system of the core network device), and/or is configured for operation, management, and/or maintenance of an access network device (an operation, administration, and maintenance system of the access network device). For example, the present disclosure includes a first OAM and a second OAM, where the first OAM is the operation, administration, and maintenance system of the core network device, and the second OAM is the operation, administration, and maintenance system of the access network device. Optionally, the first OAM and/or the second OAM include/includes an AI entity. For another example, the present disclosure includes a third OAM, where the third OAM is an operation, administration, and maintenance system of both the core network device and the access network device. Optionally, the third OAM includes an AI entity.

Optionally, to match and support the AI function, the AI entity may be integrated into a terminal or a terminal chip.

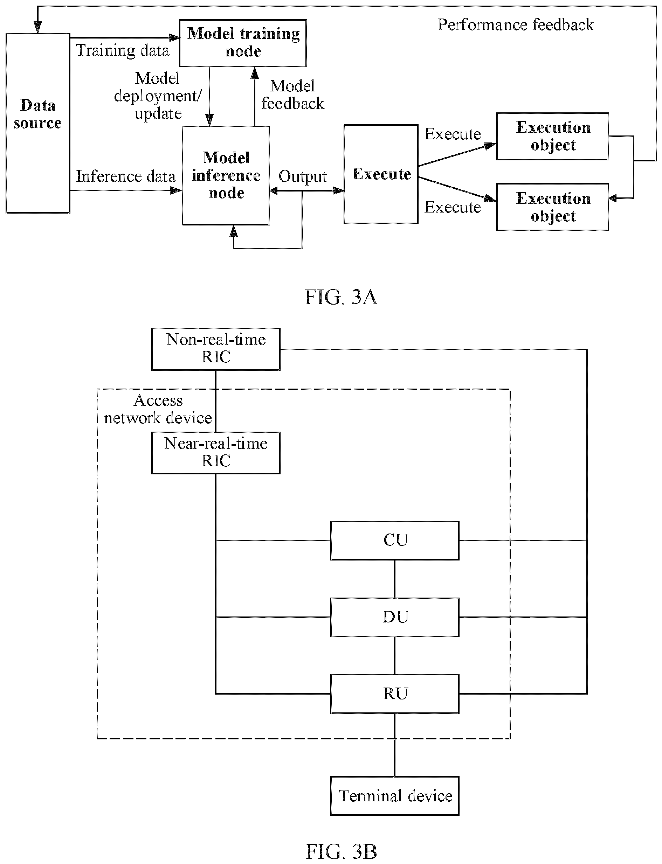

FIG. 3A is an example diagram of an application framework of AI in a communication system. In FIG. 3A, a data source (data source) is used to store training data and inference data. A model training host (model training host) performs training or update training based on the training data (training data) provided by the data source, to obtain an AI model, and deploys the AI model on a model inference host (model inference host). The AI model represents a mapping relationship between an input and an output of the model. Obtaining the AI model through learning by the model training host is equivalent to obtaining the mapping relationship between the input and the output of the model through learning by the model training host by using the training data. The model inference host uses the AI model to perform inference based on the inference data provided by the data source, to obtain an inference result. The method may also be described as follows: The model inference host inputs the inference data into the AI model, and obtains an output by using the AI model, where the output is the inference result. The inference result may indicate a configuration parameter used (acted) by an execution object, and/or an operation performed by the execution object. The inference result may be uniformly planned by an actor (actor) entity, and sent to one or more execution objects (for example, a core network element, a base station, or a UE) for execution. Optionally, the model inference host may feed back the inference result of the model inference host to the model training host. This process may be referred to as model feedback. The fed-back inference result is used by the model training host to update the AI model, and deploy the updated AI model on the model inference host. Optionally, the execution object may feed back a network parameter collected by the execution object to the data source. This process may be referred to as performance feedback. The fed-back network parameter may be used as the training data or the inference data.

In the present disclosure, the application framework shown in FIG. 3A may be deployed in the network element shown in FIG. 1. For example, the application framework in FIG. 3A may be deployed in at least one of the terminal device, the access network device, the core network device, or an independently deployed AI network element (not shown) in FIG. 1. For example, the AI network element (which may be considered as the model training host) may perform analysis or training on training data (training data) provided by the terminal device and/or the access network device, to obtain a model. The at least one of the terminal device, the access network device, or the core network device (which may be considered as the model inference host) may perform inference by using the model and the inference data, to obtain the output of the model. The inference data may be provided by the terminal device and/or the access network device. The input of the model includes the inference data, and the output of the model is the inference result corresponding to the model. The at least one of the terminal device, the access network device, or the core network device (which may be considered as the execution object) may perform a corresponding operation based on the inference result. The model inference host and the execution object may be the same or may be different. This is not limited.

With reference to FIG. 3B to FIG. 3E, the following describes, by using an example, a network architecture to which the method provided in the present disclosure can be applied.

As shown in FIG. 3B, in a first possible implementation, an access network device includes a near-real-time access network intelligent controller (RAN intelligent controller, RIC), configured to perform model training and inference. For example, the near-real-time RIC may be configured to train an AI model, and use the AI model for inference. For example, the near-real-time RIC may obtain information on a network side and/or a terminal side from at least one of a CU, a DU, or an RU. The information may be used as training data or inference data. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU.

As shown in FIG. 3B, in a second possible implementation, there is a non-real-time RIC (optionally, the non-real-time RIC may be located in an OAM or a core network device) outside an access network, configured to perform model training and inference. For example, the non-real-time RIC is configured to train an AI model, and use the model for inference. For example, the non-real-time RIC may obtain information on a network side and/or a terminal side from at least one of a CU, a DU, or an RU. The information may be used as training data or inference data. The inference result may be submitted to at least one of the CU, the DU, the RU, or a terminal device. Optionally, the CU and the DU may exchange the inference result. Optionally, the DU and the RU may exchange the inference result. For example, the non-real-time RIC submits the inference result to the DU, and the DU forwards the inference result to the RU.

As shown in FIG. 3B, in a third possible implementation, an access network device includes a near-real-time RIC, and there is a non-real-time RIC (optionally, the non-real-time RIC may be located in an OAM or a core network device) outside the access network. Same as the second possible implementation, the non-real-time RIC may be configured to perform model training and inference. Additionally/alternatively, same as the first possible implementation, the near-real-time RIC may be configured to perform model training and inference. Additionally/alternatively, the non-real-time RIC performs model training, and the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may submit the inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to train a model A, and use the model A for inference. For example, the non-real-time RIC is configured to train a model B, and use the model B for inference. For example, the non-real-time RIC is configured to train a model C, and send information about the model C to the near-real-time RIC, and the near-real-time RIC uses the model C for inference.

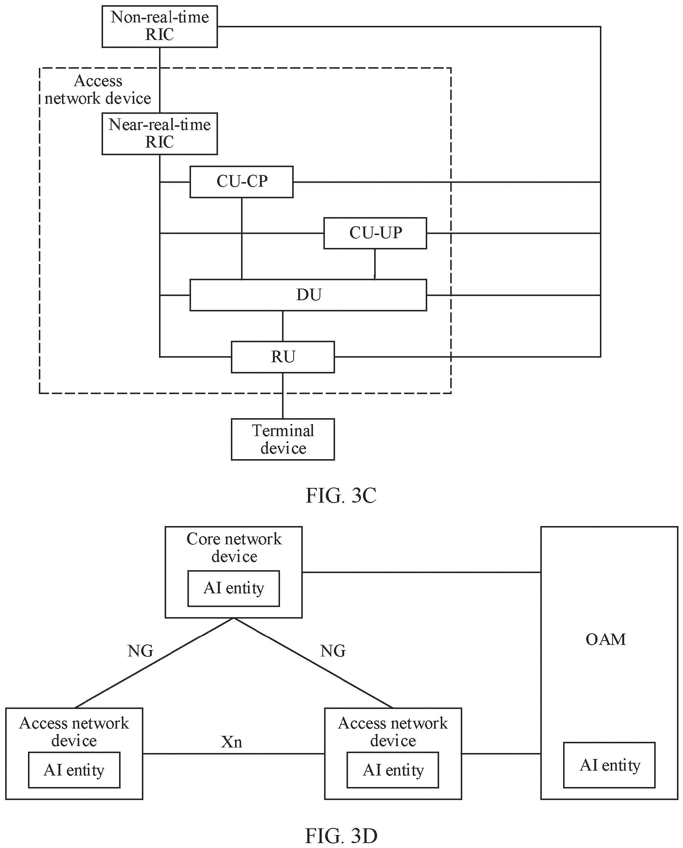

FIG. 3C is an example diagram of a network architecture to which the method provided in the present disclosure can be applied. In comparison with FIG. 3B, in FIG. 3C, a CU is split into a CU-CP and a CU-UP.

FIG. 3D is an example diagram of a network architecture to which the method provided in the present disclosure can be applied. As shown in FIG. 3D, optionally, an access network device includes one or more AI entities, and a function of the AI entity is similar to that of the foregoing near-real-time RIC. Optionally, an OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each include an AI entity, models obtained through training by the AI entities of the OAM and the core network device are different, and/or models used for inference are different.

In the present disclosure, a model difference includes at least one of the following differences: a structure parameter of the model (for example, at least one of a quantity of neural network layers, a neural network width, a connection relationship between layers, a weight of a neuron, an activation function of a neuron, or an offset in an activation function), an input parameter of the model (for example, a type of the input parameter and/or a dimension of the input parameter), or an output parameter of the model (for example, a type of the output parameter and/or a dimension of the output parameter).

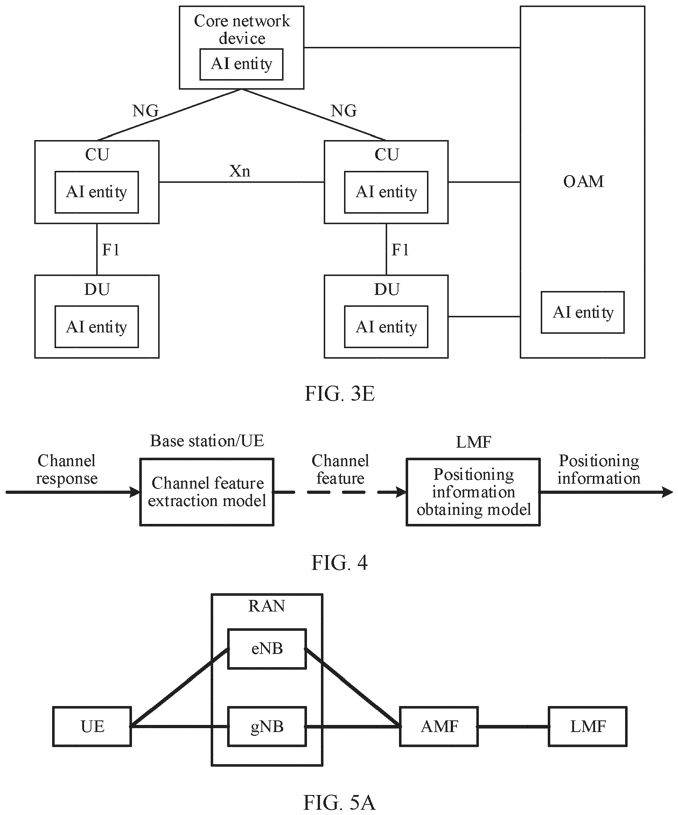

FIG. 3E is an example diagram of a network architecture to which the method provided in the present disclosure can be applied. In comparison with FIG. 3D, an access network device in FIG. 3E is split into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When the CU and the DU each include an AI entity, models trained by AI entities of the CU and the DU are different, and/or models used for inference are different. Optionally, the CU in FIG. 3E may be further split into a CU-CP and a CU-UP. Optionally, one or more AI models may be deployed in the CU-CP. Optionally, one or more AI models may be deployed in the CU-UP.

In FIG. 3D or FIG. 3E, the OAM of the access network device and the OAM of the core network device are uniformly deployed. Alternatively, as described above, in FIG. 3D or FIG. 3E, the OAM of the access network device and the OAM of the core network device may be separately deployed.

In the present disclosure, one model may obtain one output through inference, and the output includes one or more parameters. Learning processes or training processes of different models may be deployed in different devices or nodes, or may be deployed in a same device or node. Inference processes of different models may be deployed in different devices or nodes, or may be deployed in a same device or node.

In the present disclosure, a network element may perform a part of or all steps or operations related to the network element. These steps or operations are merely examples. In the present disclosure, other operations or variations of various operations may be further performed. In addition, the steps may be performed in a sequence different from a sequence presented in the present disclosure, and not all the operations in the present disclosure may need to be performed.

In examples of the present disclosure, unless otherwise stated or there is a logic conflict, terms and/or descriptions in different examples may be mutually referenced, and technical features in different examples may be combined based on an internal logical relationship thereof, to form a new example.

In the present disclosure, at least one may be further described as one or more, and a plurality of may be two, three, four, or more. This is not limited. "/" may represent an "or" relationship between associated objects. For example, A/B may represent A or B. "And/or" may be used to describe that three relationships exist between associated objects. For example, A and/or B may represent the following three cases: Only A exists, both A and B exist, and only B exists, where A and B may be singular or plural. For ease of description of the technical solutions in the present disclosure, the terms such as "first", "second", "A", or "B" may be used to distinguish between technical features with a same or similar function. The terms such as "first", "second", "A", or "B" do not limit a quantity and an execution sequence. In addition, the terms such as "first", "second", "A", or "B" are not limited to be definitely different. The terms such as "example" or "for example" are used to represent an example, an illustration, or a description. Any design solution described as "example" or "for example" should not be explained as being more preferred or advantageous than another design solution. Use of the terms such as "example" or "for example" is intended to present a related concept in a specific manner for ease of understanding.

The network architecture and the service scenario described in the present disclosure are intended to describe the technical solutions in the present disclosure more clearly, and do not constitute a limitation on the technical solutions provided in the present disclosure. A person of ordinary skill in the art may know that, with evolution of the network architecture and emergence of new service scenarios, the technical solutions provided in the present disclosure are also applicable to similar technical problems.

FIG. 4 is a schematic flowchart of a positioning method according to the present disclosure. As shown in FIG. 4, in the method, a channel feature extraction model and a positioning information obtaining model that are used in a matched manner are used to implement or assist in implementing positioning of a UE, to obtain location information of the UE. In the method, the channel feature extraction model is deployed on a RAN side, for example, deployed in a base station or the UE, and is used to map channel information such as a channel response to a channel feature. The base station or the UE sends the channel feature to a core network. The positioning information obtaining model is deployed on a core network side, for example, deployed in an LMF, and is used to map the channel feature to positioning information of the UE. The positioning information may be used to determine location information of the UE.

In this method, an AI model can be used to intelligently locate the UE, thereby improving positioning efficiency. For example, in comparison with a conventional deterministic algorithm for calculating the location information of the UE, in the method according to the present disclosure, a model is obtained through channel information training, and the positioning information of the UE obtained based on the model is closer to an actual channel environment. Therefore, the positioning of the UE that the model is used to implement or assist in implementing is more accurate.

The channel feature extraction model is an AI model, and a name and/or model content (for example, including a model structure and a model parameter) of the channel feature extraction model are/is not limited. For example, the channel feature extraction model may also be referred to as a first model, a feature extraction model, or another name, and is used to map channel information such as a channel response to a channel feature.

The positioning information obtaining model is an AI model, and a name and/or model content (for example, including a model structure and a model parameter) of the positioning information obtaining model are/is not limited. For example, the positioning information obtaining model may be referred to as a second model, a positioning model, or another name, and is used to map the channel feature to positioning information of the UE.

In a possible implementation, the positioning information of the UE indicates the location information of the UE. For example, the location information of the UE includes at least one of the following: a longitude of a location of the UE, a latitude of the location of the UE, an altitude of the location of the UE, an offset of the location of the UE relative to a reference location (for example, a location of a reference base station or a location of a reference building), and the like. In this implementation, the positioning information obtaining model can be used to determine the location information of the UE.

In a possible implementation, the positioning information of the UE indicates at least one of the following: a type of a channel between the UE and the base station, a location of a first path of the channel between the UE and the base station, or a relative azimuth between the UE and the base station (for example, an angle of arrival (angle of arrival, AoA) and/or an angle of departure (angle of departure, AOD) of a signal transmitted between the UE and the base station). In the present disclosure, the channel type includes line of sight (line of sight, LOS) or non-line of sight (non-line of sight, NLOS). The LMF obtains at least one of the channel type, the first path location, or the relative azimuth of the UE, and may determine the location information of the UE based on an obtained parameter. In this implementation, the positioning information obtaining model can assist the LMF in implementing a positioning function for the UE. In the present disclosure, the relative azimuth represents a relative azimuth between the base station and the UE, for example, an azimuth of the UE relative to the base station, or an azimuth of the base station relative to the UE.

FIG. 5A is a schematic of a system architecture of a positioning method according to the present disclosure. For a UE, when an AMF determines to initiate a positioning service for the UE, or when an AMF receives a positioning service-related request of the UE from another network element, for example, the UE or a gateway mobile location center (gateway mobile location center, GMLC), the AMF sends a positioning service request to an LMF. The LMF obtains location information of the UE based on the positioning service request, and sends the location information to the AMF. In a scenario in which the AMF receives the positioning service-related request of the UE from the another network element, the AMF sends the location information of the UE to the another network element. The AMF and the LMF may be connected in a wired or wireless manner, and are usually connected in a wired manner. The positioning service request sent by the AMF to the LMF may include UE-related information. The information may be sent by a base station in a RAN to the AMF, or may be sent by the UE to the AMF. The RAN may include a base station based on one access technology or a plurality of access technologies. For example, FIG. 5A shows an LTE base station eNB and an NR base station gNB. The base station and the AMF may be connected in a wired or wireless manner, and are usually connected in a wired manner. Optionally, when the UE sends the UE-related information to the AMF, or when the AMF sends the location information of the UE to the UE, data transmission may be performed through a logical interface between the UE and the AMF.

In the present disclosure, data (or referred to as information) between the UE and a core network element, for example, the AMF or the LMF, may be used as non-access stratum (non-access stratum, NAS) data, and is forwarded through an air interface of the base station. For example, the base station may use data from the AMF as the NAS data, and forward the data to the UE through the air interface. The UE may send, to the base station through the air interface, data that is sent to the AMF and that is used as the NAS data, and the base station forwards the data to the AMF.

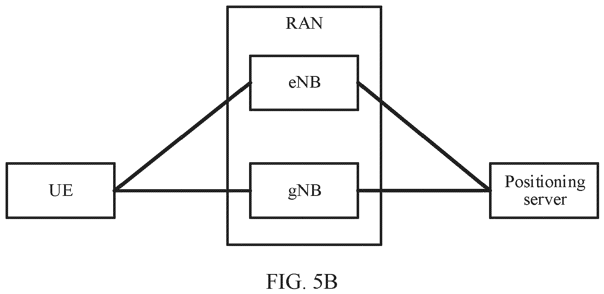

FIG. 5A shows a possible system framework according to an embodiment of this application, and is not intended to limit this application. For example, different from the system framework shown in FIG. 5A, there is a logical interface between a UE and an LMF, and the UE may exchange data with the LMF through the logical interface without using an AMF. For example, the UE may send a positioning service request to the LMF, and the LMF may send location information of the UE to the UE. Similar to the foregoing method for data exchange between the UE and the AMF, data between the UE and the LMF may be used as NAS data and forwarded by a base station. For another example, different from the system framework shown in FIG. 5A, there is an interface between a base station and an LMF for data exchange. In this case, the base station and the LMF may be connected in a wired or wireless manner, and are usually connected in a wired manner. For another example, different from a communication system shown in FIG. 5A, a function of an AMF and a function of an LMF may be integrated into a same module, or a positioning function of an AMF and a positioning function of an LMF may be integrated into a same module. For example, as shown in FIG. 5B, a device in which the module is located may be referred to as a positioning server. Examples are not provided one by one in the present disclosure.

The present disclosure is described by using an example in which an LMF implements a positioning method. The present disclosure may also be applicable to another example in which another network element implements the positioning method. In this case, the LMF may be replaced with the another network element. A network element configured to implement the positioning method may be referred to as an LMF, or may have another name, for example, a first network element or another name. This is not limited. In the present disclosure, as described in FIG. 5A, the AMF may assist the LMF in implementing a positioning function of the UE. The AMF may have another name, for example, a second network element. This is not limited.

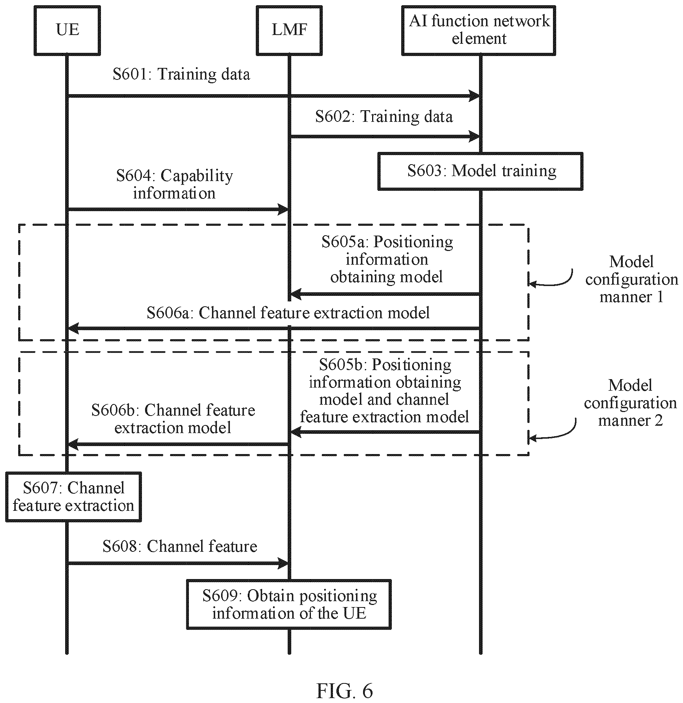

FIG. 6 is a flowchart of a first positioning method according to the present disclosure. The method includes the following operations.

Optionally, operation S601: AUE sends training data to an AI function network element. Optionally, operation S602: An LMF sends the training data to the AI function network element. Optionally, operation S603: The AI function network element performs model training by using the training data.

The AI function network element may perform model training by using the training data, to obtain a channel feature extraction model and a positioning information obtaining model. The training data may be sent by the UE and/or the LMF to the AI function network element.

In the present disclosure, when the UE exchanges information with the AI function network element, for example, when the UE sends the training data to the AI function network element or when the following AI function network element sends information about the channel feature extraction model to the UE, the AI function network element directly communicates with the UE in a wired or wireless manner, or the AI function network element communicates with the UE through forwarding by another network element (for example, a core network element and/or a base station, which is not limited).

In the present disclosure, when the LMF exchanges information with the AI function network element, for example, when the LMF sends the training data to the AI function network element or when the following AI function network element sends model information to the LMF, the AI function network element directly communicates with the LMF in a wired or wireless manner, or the AI function network element communicates with the LMF through forwarding by another network element (for example, a base station, and/or an AMF or another core network element, which is not limited).

Operations S601, S602, and S603 are optional. For example, the channel feature extraction model and the positioning information obtaining model are agreed on in a protocol after offline training. Alternatively, the channel feature extraction model and the positioning information obtaining model are downloaded from a third-party website. In this case, S601, S602, and S603 may be skipped.

Optionally, operation S601 and operation S603 are performed, but operation S602 is not performed; or operation S602 and operation S603 are performed, but operation S601 is not performed; or operations S601, S602, and S603 are all performed. In operation S601, the training data sent by the UE to the AI function network element may be measured by the UE and/or sent by the base station to the UE by using signaling. In operation S602, the training data sent by the LMF to the AI function network element may be sent by the UE and/or the base station to the LMF.

The training data obtained by the AI function network element includes training data used to determine an input of the channel feature extraction model and a label corresponding to the input. The label corresponding to the input may be understood as a target output or an ideal output of the positioning information obtaining model. For example, when the input of the channel feature extraction model is determined based on training data A, the target output of the positioning information obtaining model is a label corresponding to the training data A.

Optionally, the training data used to determine the input of the channel feature extraction model includes at least one of the following:

- Channel response between the UE and the base station.

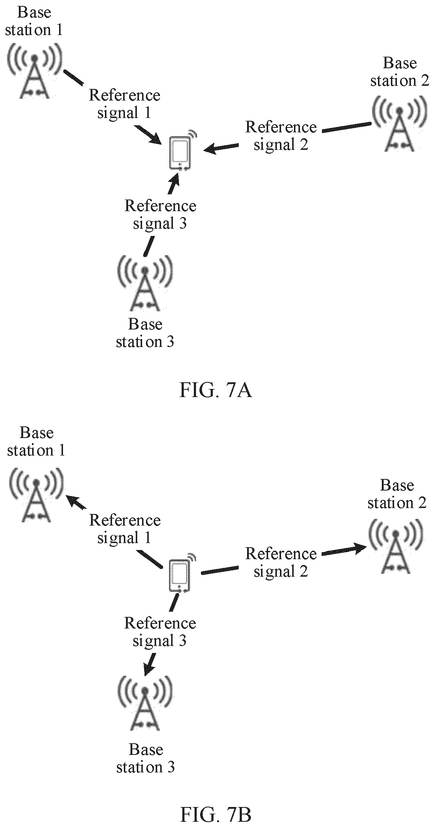

Optionally, the channel response between the UE and the base station is measured by the UE and then sent to the AI function network element or the LMF. For example, as shown in FIG. 7A, P (a case in which three are shown in FIG. 7A is used as an example for description, which is not limited) base stations send Y downlink reference signals to the UE. A reference signal sent by the base station to the UE is a downlink reference signal, which may be referred to as a reference signal for short in the present disclosure. The UE receives the Y reference signals. Y is an integer greater than or equal to 1, and is usually an integer greater than 1, for example, 3, 4, 5, or a larger number. P is an integer greater than or equal to 1 and less than or equal to Y (a case in which Y is equal to P in FIG. 7A is used as an example for description, which is not limited).

Optionally, in the present disclosure, when the UE receives the reference signal, the LMF or the base station may configure at least one of the following of the reference signal for the UE: a bandwidth, a time domain resource, a frequency domain resource, a transmission count, an antenna port, a spatial correlation, or the like.

In the present disclosure, one base station may manage one or more cells with different coverage. In one cell, the base station may work in one or more frequency bands. The base station may send, in different cells, a plurality of reference signals to the UE, where one cell corresponds to one reference signal; and/or the base station may send, in different frequency bands of a same cell, a plurality of reference signals to the UE, where one frequency band corresponds to one reference signal. In the method, it may be considered that one reference signal corresponds to one channel.

Optionally, different frequency bands may be further considered as different cells. For example, a base station A sends, in a cell 1 and a cell 2, a reference signal 1 and a reference signal 2 to the UE, respectively. In this case, it may be considered that the base station A sends, in the cell 1, the reference signal 1 to the UE through a channel 1, and sends, in the cell 2, the reference signal 2 to the UE through a channel 2. Quantities of reference signals sent by different base stations to the UE may be the same or may be different. This is not limited. Optionally, in one cell, the base station may send a plurality of reference signals to the UE by using a plurality of different beams, where one beam corresponds to one reference signal.

In the present disclosure, the downlink reference signal may be a downlink synchronization signal, a positioning reference signal (positioning reference signal, PRS), or another signal whose sending sequence is known information. This is not limited. The known information may be agreed on in a protocol, or may be notified by the base station to the UE in advance by using signaling.

For a $y^{th}$ reference signal in the Y reference signals, the UE may estimate or calculate, based on a sending sequence of the reference signal known to the UE and a sequence of the reference signal received by the UE, a channel response of a channel through which the reference signal passes. The channel response corresponds to a channel between the UE and a base station that sends the $y^{th}$ reference signal. For example, if P is equal to Y, and each base station sends one reference signal to the UE, the channel response corresponds to a channel between the UE and a $y^{th}$ base station in the Y base stations. A value of y ranges from 1 to Y For example, the UE sends a total of Y channel responses to the AI function network element or the LMF. The Y channel responses are in one-to-one correspondence with Y channels between the UE and the P base stations, and each channel response uniquely corresponds to one of the channels. Each channel response may be represented in a form of a multi-dimensional array. For example, if a quantity of transmit antennas is Nt, a quantity of receive antennas is Nr, there are K subcarriers in frequency domain, and there are L orthogonal frequency division multiplexing (orthogonal frequency division multiplexing, OFDM) symbols in time domain, an array dimension of the channel response is Nt $\times$ Nr $\times$ K $\times$ L. Nt, Nr, K, and L are positive integers, and each element indicates a channel response that is between the UE and the base station and that is on an index corresponding to the element. For example, Nt, Nr, K, and L correspond to a $(j1)^{th}$ transmit antenna, a $(j2)^{th}$ receive antenna, a $(j3)^{th}$ subcarrier, and a $(j4)^{th}$ OFDM symbol, respectively. For simplification, noise is not considered. A response h between the UE and the base station satisfies a formula: Srs = Stx * h. In the formula, Srs represents a time-domain received signal, Stx represents a time-domain sent signal, * represents convolution, and h represents a time-domain channel response. Alternatively, a response h between the UE and the base station satisfies a formula: Srs = Stx $\times$ h. In the formula, Srs represents a frequency-domain received signal, Stx represents a frequency-domain sent signal, $\times$ represents multiplication, and h represents a frequency-domain channel response. Srs, Stx, and h may be real numbers or complex numbers. j1 is greater than or equal to 1 and less than or equal to Nt, j2 is greater than or equal to 1 and less than or equal to Nr, j3 is greater than or equal to 1 and less than or equal to K, and j4 is greater than or equal to 1 and less than or equal to L. For brevity of description, the following uses an example in which one base station sends one reference signal to the UE for description.

Optionally, the channel response between the UE and the base station is measured by the base station and then sent to the UE or the LMF. For example, as shown in FIG. 7B, the UE sends uplink reference signals to P (a case in which three are shown in FIG. 7B is used as an example for description) base stations, respectively, and sends a total of Y uplink reference signals. A reference signal sent by the UE to the base station is an uplink reference signal, which may be referred to as a reference signal for short in the present disclosure. The P base stations receive the uplink reference signals, respectively. Y is an integer greater than or equal to 1, and is usually an integer greater than 1, for example, 3, 4, 5, or a larger number. P is an integer greater than or equal to 1 and less than or equal to Y (a case in which Y is equal to P in FIG. 7B is used as an example for description, which is not limited). Similar to the foregoing descriptions of the downlink reference signal, the UE may send, in different cells, a plurality of reference signals to one base station, where one cell corresponds to one reference signal; and/or the UE may send, in different frequency bands of a same cell, a plurality of reference signals to one base station, where one frequency band corresponds to one reference signal. In the method, it may be considered that one reference signal corresponds to one channel. Optionally, different frequency bands may be further considered as different cells. For example, the UE sends, in a cell 1 and a cell 2, a reference signal 1 and a reference signal 2 to a base station A, respectively. In this case, it may be considered that the UE sends, in the cell 1, the reference signal 1 to the base station A through a channel 1, and sends, in the cell 2, the reference signal 2 to the base station A through a channel 2. Optionally, in one cell, the base station may receive a plurality of reference signals from the UE by using a plurality of different beams, where one beam corresponds to one reference signal. Quantities of reference signals sent by the UE to different base stations may be the same or may be different. This is not limited. In the present disclosure, the uplink reference signal may be a random access preamble, a sounding reference signal (sounding reference signal, SRS), or another signal whose sending sequence is known information. This is not limited. The known information may be agreed on in a protocol, or may be notified by the base station to the UE in advance by using signaling. After receiving a $y^{th}$ uplink reference signal, a corresponding base station in the P base stations may estimate or calculate, based on a sending sequence of the reference signal known to the base station and a sequence of the reference signal received by the base station, a channel response of a channel through which the reference signal passes. The channel response corresponds to a channel between the UE and the base station that receives the $y^{th}$ uplink reference signal, or is described as corresponding to a channel through which the $y^{th}$ uplink reference signal passes. The base station sends the channel response to the UE or the AI function network element. A value of y ranges from 1 to Y The UE or the AI function network element receives a total of Y channel responses from the P base stations. For brevity of description, the following uses an example in which the UE sends one reference signal to one base station for description.

Optionally, in the present disclosure, when the base station receives the reference signal, the LMF may configure at least one of the following of the reference signal for the base station: a bandwidth, a time domain resource, a frequency domain resource, a transmission count, an antenna port, a spatial correlation, or the like.

Although both the uplink reference signal and the downlink reference signal in the present disclosure may be referred to as a reference signal for short, whether the reference signal is an uplink reference signal or a downlink reference signal may be determined based on a sending body and/or a receiving body. In the present disclosure, the uplink reference signal and the downlink reference signal are different in at least one of the following: a sending direction, a time domain resource, a frequency domain resource, or a sequence value of a reference signal.

Optionally, in the training data, the "channel response between the UE and the base station" may be further replaced with at least one of the following: an amplitude of the channel response, a phase of the channel response, a real part of the channel response, an imaginary part of the channel response, a phase difference of channel responses of different receive antennas or transmit antennas, or a phase difference between a plurality of channel responses. The channel response and these variations of the channel response may be collectively referred to as channel information. Optionally, the channel information may further include a reference signal received power (reference signal received power, RSRP), a reference signal time difference (reference signal time difference, RSTP), and a type of an environment in which the UE is located.

- RSRP of the channel between the UE and the base station.

Optionally, the RSRP is measured by the UE and then sent to the AI function network element or the LMF. For example, based on the foregoing descriptions of FIG. 7A, an example in which P is equal to Y and each base station sends one reference signal to the UE is used. After estimating a channel response of the channel between the UE and the $y^{th}$ base station, the UE may obtain the RSRP of the channel based on the channel response. A value of y ranges from 1 to Y For example, the UE sends a total of Y RSRPs to the AI function network element or the LMF, the Y RSRPs are in one-to-one correspondence with Y channels between the UE and the Y base stations, and each RSRP uniquely corresponds to one of the channels. A case in which P is not equal to Y is similar to the foregoing descriptions. Details are not described herein again.

Optionally, the information is measured by the base station and then sent to the UE or the LMF. For example, based on the foregoing descriptions of FIG. 7B, an example in which P is equal to Y and the UE sends one reference signal to each base station is used. After estimating the channel response of the channel between the UE and the $y^{th}$ base station, the $y^{th}$ base station may obtain the RSRP of the channel based on the channel response. The $y^{th}$ base station sends the RSRP to the LMF or the UE. A value of y ranges from 1 to Y The UE or the AI function network element receives a total of Y RSRPs from the Y base stations. A case in which P is not equal to Y is similar to the foregoing descriptions. Details are not described herein again.

- RSTP of the channel between the UE and the base station.

The information is measured by the UE and then sent to the AI function network element or the LMF. For example, based on the foregoing descriptions of FIG. 7A, the UE may obtain RSTDs of different reference signals through estimation. For example, P is equal to Y, and each base station sends one reference signal to the UE. The UE may measure an RSTD of a reference signal of the $y^{th}$ base station and an RSTD of a reference signal of a $1^{st}$ base station, to obtain a total of Y-1 RSTDs, and the UE sends the Y-1 RSTDs to the AI function network element or the LMF. Alternatively, the UE may measure an RSTD of a reference signal of the $y^{th}$ base station and an RSTD of a reference signal of a $(y-1)^{th}$ base station, to obtain a total of Y-1 RSTDs, and the UE sends the Y-1 RSTDs to the AI function network element or the LMF. A specific RSTD reporting method is not limited in the present disclosure. A value of y ranges from 2 to Y A case in which P is not equal to Y is similar to the foregoing descriptions. Details are not described herein again.

- Type of the environment in which the UE is located.

The type of the environment in which the UE is located may be a factory environment, an office environment, a high-speed railway environment, a metro environment, a shopping mall environment, a residential area environment, or another possible environment. This is not limited. The information may be reported by the UE or the base station to the AI function network element or the LMF. In the present disclosure, training data corresponding to different environments may be used to train models corresponding to different environments.

Optionally, the target output (a label of the training data) of the positioning information obtaining model includes at least one of the following:

- Location information of the UE.

The location information of the UE includes a longitude of a location of the UE, a latitude of the location of the UE, an altitude of the location of the UE, an offset of the location of the UE relative to a reference location (for example, a location of a reference base station or a location of a reference building), and the like.

Optionally, the UE is a beacon UE. The UE knows the location information of the UE, and the UE sends the location information to the AI function network element or the LMF. Alternatively, the base station knows the location information of the UE, and the base station sends the location information to the UE or the LMF. Alternatively, the LMF knows the location information of the UE, and the LMF sends the location information to the AI function network element. The base station is at least one of the P base stations.

Optionally, the LMF obtains the location information of the UE by using a non-AI-based positioning method, and sends the location information to the AI function network element. For example, in the present disclosure, the non-AI-based positioning method may be a downlink (downlink, DL)-time difference of arrival (time difference of arrival, TDOA) positioning method, an uplink (uplink, UL)-DOA positioning method, a UL-AoA positioning method, a DL-AOD positioning method, or another positioning method described in the 3rd generation partnership project (3rd generation partnership project, 3GPP) 38.305 protocol. This is not limited. Optionally, to increase precision, the LMF may obtain a plurality of pieces of estimated location information of the UE through a plurality of times of estimation, use a weighted average of the plurality of pieces of estimated location information as the location information of the UE, and send the location information to the AI function network element.

- Type of the channel between the UE and the base station.

For a given base station, the type of the channel between the UE and the base station may be LOS or NLOS.

Optionally, an example in which P is equal to Y is used, and the UE is a beacon UE. The UE knows a channel type of a channel between the UE and the $y^{th}$ base station, the UE sends the channel type to the AI function network element or the LMF, and the UE sends a total of Y channel types. Alternatively, the $y^{th}$ base station knows a channel type of a channel between the UE and the $y^{th}$ base station, the $y^{th}$ base station sends the channel type to the UE or the LMF, a total of Y base stations send the channel type to the UE or the LMF, and the UE or the LMF receives a total of Y channel types. Alternatively, the LMF knows a channel type of a channel between the UE and the $y^{th}$ base station, the LMF sends the channel type to the AI function network element, and the LMF sends a total of Y channel types. A value of y ranges from 1 to Y When P is not equal to Y, the method is similar. For example, for a base station A, the base station A performs transmission (sending or receiving), in a cell 1 and a cell 2, of a reference signal 1 and a reference signal 2 with the UE, respectively. In this case, for the channel 1 corresponding to the reference signal 1 and the channel 2 corresponding to the reference signal 2, the UE or the base station A respectively sends a channel type of the channel 1 and a channel type of the channel 2. In other words, a total of Y channel types are determined for Y channels between the P base stations and the UE, and each channel corresponds to one reference signal. Similar cases are not described again in the following.

Optionally, an example in which P is equal to Y is used. The LMF obtains the channel type of the channel between the UE and the $y^{th}$ base station by using a non-AI-based channel type determining method, and sends the channel type to the AI function network element. The LMF sends a total of Y channel types. A value of y ranges from 1 to Y Optionally, to increase precision, the LMF may obtain channel types of the channel between the UE and the $y^{th}$ base station through a plurality of times of estimation, use a channel type that appears more frequently or appears with a high probability as the channel type of the channel between the UE and the $y^{th}$ base station, and send the channel type to the AI function network element. For example, the LMF obtains channel types of the channel between the UE and the $y^{th}$ base station through five times of estimation, and the channel types are LOS, NLOS, LOS, LOS, and LOS, respectively. Because LOS appears more frequently or appears with a high probability, the LMF considers that the channel type between the UE and the $y^{th}$ base station is LOS. When P is not equal to Y, the method is similar. For example, for a base station A, the base station A performs transmission (sending or receiving), in a cell 1 and a cell 2, of a reference signal 1 and a reference signal 2 with the UE, respectively. In this case, for the channel 1 corresponding to the reference signal 1 and the channel 2 corresponding to the reference signal 2, the LMF respectively determines a channel type of the channel 1 and a channel type of the channel 2. In other words, a total of Y channel types are determined for Y channels between the P base stations and the UE, and each channel corresponds to one reference signal. Similar cases are not described again in the following.

Optionally, in the present disclosure, the non-AI-based channel type determining method may be determining, by using a Rician (rician) factor of a channel response, whether the channel type is LOS or NLOS. Usually, a Rician factor of a LOS signal is higher than a Rician factor of an NLOS signal. For example, the Rician factor of the channel response may be compared with a threshold. When the Rician factor is greater than or equal to the threshold, the channel type is LOS; otherwise, the channel type is NLOS. For a channel response, the Rician factor of the channel response may be represented as $\dfrac{|h_{max}|^2}{2*\sigma_h^2}$, where $|h_{max}|^2$ represents power of a strongest path in the channel response, and $2*\sigma_h^2$ represents average power of various paths in the channel response.

Optionally, in the present disclosure, the non-AI-based channel type determining method may be determining, by using another parameter of a signal in the channel, for example, kurtosis, skewness, or a root mean squared delay, whether the channel type is LOS or NLOS. For example, the kurtosis of the channel response may be compared with a threshold. When the kurtosis is greater than or equal to the threshold, the channel type is LOS; otherwise, the channel type is NLOS. For a channel response, the kurtosis of the channel response may be represented as $\dfrac{E\left[(|h|-\mu)^4\right]}{\sigma^4}$, where $|h|$ represents an amplitude of the channel response, $\mu$ represents an average value of amplitudes of the channel response, $\sigma^4$ represents a square of variance of the amplitudes of the channel response, and $E[\ ]$ represents averaging. Similarly, the skewness of the channel response may be represented as $\dfrac{E\left[(|h|-\mu)^3\right]}{\sigma^3}$, the root mean squared delay may be represented as $\dfrac{\int t|h(t)|^2 dt}{\int |h(t)|^2 dt}$, $h(t)$ is a time-domain channel response, and $\int$ represents an integral operation. A method for determining the channel type by using the skewness or the root mean squared delay of the signal is similar, provided that the kurtosis is replaced with the skewness or the root mean squared delay. Details are not described herein again.

- First path location of the channel between the UE and the base station.

A method for determining the first path location of the channel between the UE and the base station and a reporting method are similar to the foregoing descriptions of the "type of the channel between the UE and the base station." For example, the channel type is replaced with the first path location, and the foregoing Rician factor is replaced with path energy. Details are not described herein again.

Optionally, in the present disclosure, when measuring the training data, to improve measurement accuracy, the UE, the base station, and/or the LMF may repeatedly measure a single piece of training data for a plurality of times, and use a comprehensive value, for example, an average value, a weighted sum, or another possible value, of the plurality of times of repeated measurements as the training data. The method can improve reliability of the training data. Optionally, when measuring the training data, the UE, the base station, and/or the LMF may further mark reliability and/or generation time of the training data for reference in a model training process. For example, training data that is close to generation time during training and/or that has high reliability may be used for model training.

Optionally, in the present disclosure, the AI function network element obtains a plurality of pieces of training data corresponding to at least one UE. The plurality of pieces of training data may be considered as one training data set. The AI function network element performs model training by using the training data set, to obtain the channel feature extraction model and the positioning information obtaining model. When one training data set corresponds to a plurality of UEs, two different pieces of training data in the training data set may correspond to two different UEs, correspond to measurement data of a same UE at two different geographical locations, correspond to measurement data of a same UE at two different moments, or correspond to measurement data of a same UE at two different frequency bands. When one training data set corresponds to one UE, two different pieces of training data in the training data set correspond to measurement data of a same UE at two different geographical locations, correspond to measurement data of a same UE at two different moments, or correspond to measurement data of a same UE at two different frequency bands.

In the present disclosure, one training dataset may correspond to one environment type. For example, the AI function network element obtains a plurality of pieces of training data corresponding to at least one UE in the environment. The plurality of pieces of training data may be considered as one training data set. The AI function network element performs model training by using the training data set, to obtain a channel feature extraction model and a positioning information obtaining model that correspond to the environment type. Similar to the foregoing descriptions, when one training data set corresponds to a plurality of UEs, two different pieces of training data in the training data set may correspond to two different UEs in a same environment type, or correspond to measurement data of a same UE in a same environment type but at two different geographical locations, different moments, or different frequency bands. When one training data set corresponds to one UE, two different pieces of training data in the training data set correspond to measurement data of a same UE in a same environment type but at two different geographical locations, different moments, or different frequency bands. As described above, the environment type may be a factory environment, an office environment, a high-speed railway environment, a metro environment, a shopping mall environment, a residential area environment, or another possible environment. This is not limited. In the method, a model that better matches each environment type can be obtained by independently training the model for the environment type. Therefore, during model application, a corresponding model may be matched and applied based on an environment of the UE.

In the present disclosure, a UE configured to perform model training and a UE configured to perform model inference may be the same (as shown in the figure in the present disclosure), or may be different. This is not limited. For example, a first UE performs operation S601, and a second UE performs operations S604, S606a, S606b, S607, and S608. Positioning information of the second UE is determined in operation S609. The first UE and the second UE may be the same, or may be different. Regardless of whether the first UE and the second UE are the same, a base station configured to perform model training and a base station configured to perform model inference may be the same (as shown in the figure in the present disclosure), or may be different. This is not limited. For example, a model training process (for example, operation S601) relates to a first group of P base stations, and a model application process (for example, operation S607) relates to a second group of P base stations. The first group of P base stations and the second group of P base station may be the same, or may be different. When the first group of P base stations and the second group of P base stations are different, at least one base station in the first group of P base stations is not included in the second group of P base stations. Optionally, the first UE and the second UE are the same, and at least one same base station exists in the first group of P base stations and the second group of P base stations. The same base station communicates with the UE in a first cell when in the first group of P base stations, and communicates with the UE in a second cell when in the second group of P base stations. The first cell and the second cell may be the same, or may be different.

After the training data set is collected, for the training data in the training data set, the AI function network element may obtain the channel feature extraction model and the positioning information obtaining model through training by using the training data and a label corresponding to the training data. During model training, a parameter of the model may be adjusted, and an objective of the model training is as follows: When an input of the channel feature extraction model is determined based on the training data in the training data set, and an input of the positioning information obtaining model is obtained based on an output of the channel feature extraction model, an output of the positioning information obtaining model is as close to the label of the training data as possible. A training method of an AI model is not described in detail or limited in this application. For example, mature methods in the industry for training a neural network, such as a stochastic gradient descent (stochastic gradient descent, SGD) method, a batch gradient descent (batch gradient descent, BGD) method, an adaptive gradient algorithm (adaptive gradient algorithm, AdaGrad), a momentum algorithm (momentum algorithm), and a Newton's method (newton's method), may be used, to obtain a neural network parameter that is as optimal as possible through iterative training. A model training method obtained through research in the industry in the future is also applicable to the present disclosure. This is not limited.

Optionally, the AI function network element may further collect a new training data set, and perform model update training by using the new training data set, to obtain an updated channel feature extraction model and an updated positioning information obtaining model. For example, the update training is periodic. The AI function network element uses data collected in a periodicity as a training data set, and performs update training by using the training data set. For another example, the update training is triggered by an event. For example, when an error of a measurement result of the positioning information obtaining model exceeds a threshold, the AI function network element performs update training on the channel feature extraction model and the positioning information obtaining model based on the new training data set.

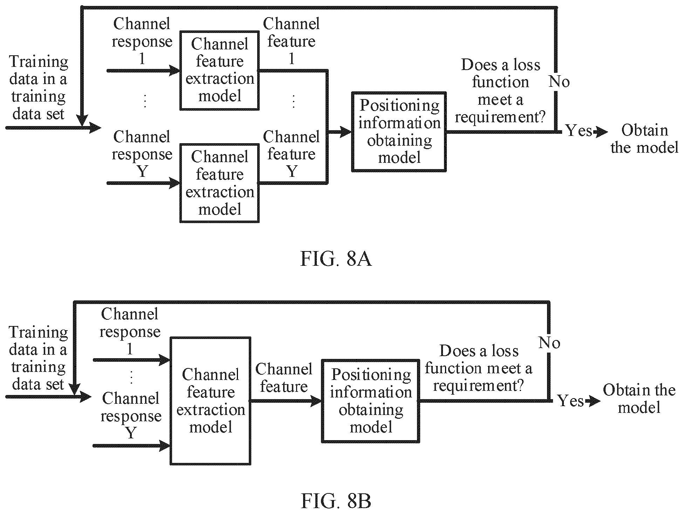

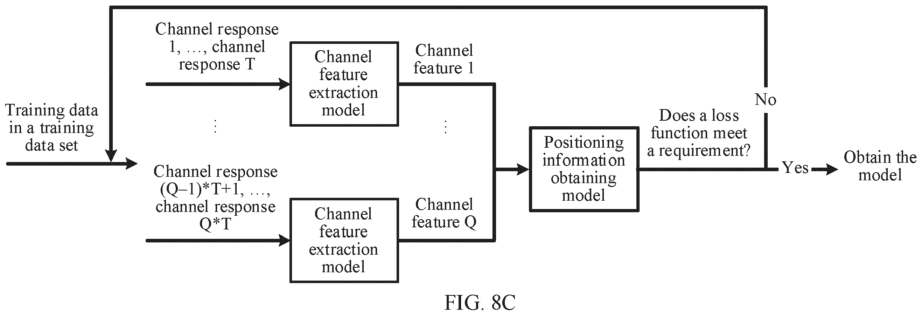

FIG. 8A, FIG. 8B, and FIG. 8C are structural diagrams of training a channel feature extraction model and a positioning information obtaining model for positioning. The following describes, based on FIG. 8A, FIG. 8B, and FIG. 8C, how an AI function network element trains a channel feature extraction model and a positioning information obtaining model based on a training data set.

For a piece of training data A in the training set, a process of training the channel feature extraction model and the positioning information obtaining model by using the training data A may be referred to as a training process.

Optionally, as shown in FIG. 8A, the training data A includes Y channel responses $H_1$, $H_2$, ..., $H_Y$. For each of the Y channel responses, or for a $y^{th}$ channel response $H_y$, the AI function network element determines an input $Feature\_model\_In_y$ of the channel feature extraction model. A value of y ranges from 1 to Y The AI function network element obtains an output $Feature\_model\_Out_y$ of the channel feature extraction model based on the input *Feature_model_In$_y$* and the channel feature extraction model, where *Feature_model_Out$_y$* indicates a channel feature $S_y$. The AI function network element may obtain a total of Y channel features $S_1$, $S_2$, ..., $S_Y$ based on the channel feature extraction model and the Y channel responses. In the method, for each channel response $H_y$, the channel feature extraction model is used to obtain the channel feature $S_y$ corresponding to the channel response.

Optionally, the channel feature $S_y$ may be a real number, a vector, a matrix, or a multi-dimensional (greater than one dimension) array. This is not limited.

The AI function network element determines an input of the positioning information obtaining model based on the output of the channel feature extraction model. For example, the AI function network element determines the input of the positioning information obtaining model based on the Y channel features. The AI function network element outputs positioning information based on the input and the positioning information obtaining model. For example, the AI function network element may obtain B inputs *Position_model_In$_b$* of the positioning information obtaining model based on the channel features $S_1$, $S_2$, ... , $S_Y$. A value of b ranges from 1 to B, and B is an integer greater than or equal to 1. The AI function network element inputs the B inputs into the positioning information obtaining model, to obtain B outputs *Position_model_Out$_b$*. A value of b ranges from 1 to B. An output corresponding to *Position_model_In$_b$* is *Position_model_Out$_b$*.

*Position_model_Out$_b$* indicates location information of a UE, or indicates at least one of the following of each of the Y channels: a channel type, a first path location, or a relative azimuth of a UE (for example, an AOA and/or an AOD of a reference signal communicated through the channel). In a model training algorithm, the channel feature extraction model and/or the positioning information obtaining model are/is adaptively adjusted by comparing the outputs *Position_model_Out$_b$* with a label of the training data A (target output). The channel feature extraction model and the positioning information obtaining model that are obtained in one training process may be used for next iterative training. In the next iterative training, the channel feature extraction model and the positioning information obtaining model that are obtained through training based on the training data A are used as basic models or initial models for update training. After a plurality of times of iterative training, a difference between an output of the positioning information obtaining model and the target output is enabled to be as small as possible. For example, an iterative training count $N_{train}$ may be defined, and a model obtained after $N_{train}$ times of iterative training is used as a model obtained through training. $N_{train}$ is a positive integer. For another example, a loss function may be defined. The loss function is used to represent the difference between the output of the positioning information obtaining model and the target output. After a plurality of iterations by using a plurality of pieces of training data in the training data set, when a value of the loss function is as small as possible or is less than a threshold (or a threshold), a model obtained through iterative training is used as a model obtained through training.

Optionally, as shown in FIG. 8B, the training data A includes Y channel responses $H_1$, $H_2$, ... , $H_Y$. The AI function network element determines an input of the channel feature extraction model based on the Y channel responses, and obtains an output of the channel feature extraction model based on the input and the channel feature extraction model, where the output indicates one channel feature S. Optionally, S may be a real number, a vector, a matrix, or a multi-dimensional (greater than one dimension) array. This is not limited. It may be considered that the channel feature S corresponds to Y channels between the UE and P base stations. The AI function network element determines an input of the positioning information obtaining model based on the channel feature S. The AI function network element outputs positioning information of the UE based on the input and the positioning information obtaining model. For example, the AI function network element may obtain an input *Position_model_In* of the positioning information obtaining model based on the channel feature S. The AI function network element inputs *Position_model_In* into the positioning information obtaining model, and outputs *Position_model_Out*.

*Position_model_Out* indicates location information of the UE, or indicates at least one of the following of each of the Y channels: a channel type, a first path location, or a relative azimuth of the UE (for example, an AOA and/or an AOD of a reference signal communicated through the channel). Similar to the foregoing descriptions of FIG. 8A, after a plurality of times of iterative training by using a plurality of pieces of training data in the training data set is completed, the channel feature extraction model and the positioning information obtaining model may be obtained.

Optionally, as shown in FIG. 8C, the training data A includes Y channel responses $H_1$, $H_2$, ... , $H_Y$. The AI function network element may determine a total of Q inputs of the channel feature extraction model based on the Y channel responses. Each input is determined by T channel responses in the Y channel responses, where Q and T are positive integers, and Q × T = Y. For a $q^{th}$ input in the Q inputs, the AI function network element obtains an output of the channel feature extraction model based on the input and the channel feature extraction model, where the output indicates a channel feature $S_q$, and a value of q ranges from 1 to Q. Optionally, the channel feature $S_q$ may be a real number, a vector, a matrix, or a multi-dimensional (greater than one dimension) array. This is not limited. The AI function network element may obtain a total of Q channel features $S_1$, $S_2$, ..., $S_Q$ based on the channel feature extraction model and the Y channel responses. It may be considered that the Q channel features correspond to the Y channels. In the method, for every T channel responses, the channel feature extraction model is used to obtain one channel feature $S_q$ corresponding to the T channel responses. The AI function network element determines an input of the positioning information obtaining model based on $S_1$, $S_2$, ... , $S_Q$. The AI function network element outputs positioning information of the UE based on the input and the positioning information obtaining model. For example, the AI function network element may obtain N inputs *Position_model_In_n* of the positioning information obtaining model based on the channel features $S_1$, $S_2$, ... , $S_Q$, where a value of n ranges from 1 to N, and N is an integer greater than or equal to 1. The AI function network element inputs the N inputs *Position_model_In_n* into the positioning information obtaining model, to obtain N outputs *Position_model_Out_n*. A value of n ranges from 1 to N. An output corresponding to *Position_model_In_n* is *Position_model_Out_n*.

*Position_model_Out_n* indicates location information of the UE, or indicates at least one of the following of each of the Y channels: a channel type, a first path location, or a relative azimuth of the UE (for example, an AOA and/or an AOD of a reference signal communicated through the channel). Similar to the foregoing descriptions of FIG. 8A, after a plurality of times of iterative training by using a plurality of pieces of training data in the training data set is completed, the channel feature extraction model and the positioning information obtaining model may be obtained.

Optionally, in the present disclosure, in the model training algorithm, an input dimension and/or an output dimension of the model may be predefined or predetermined. Therefore, the channel feature extraction model obtained through training can meet requirements on feedback overheads and positioning information precision. For example, a smaller output dimension of the channel feature extraction model indicates lower feedback overheads. A larger output dimension of the channel feature extraction model indicates higher positioning information precision.

In the present disclosure, the determining the input of the channel feature extraction model based on the channel response includes but is not limited to: using the channel response as an input of the channel feature extraction model; separating a real part of a channel response whose dimension is Z-dimensional from an imaginary part, combining a separated real part matrix whose dimension is Z-dimensional and a separated imaginary part matrix whose dimension is Z-dimensional into a 2Z-dimensional matrix, and using the 2Z-dimensional matrix as an input of the channel feature extraction model; or separating an amplitude of a channel response whose dimension is Z-dimensional from a phase, combining a separated amplitude matrix whose dimension is Z-dimensional and a separated phase matrix whose dimension is Z-dimensional into a 2Z-dimensional matrix, and using the 2Z-dimensional matrix as an input of the channel feature extraction model; combining the real part matrix, the imaginary part matrix, the amplitude matrix, and the phase matrix into a 4Z-dimensional matrix, and using the 4Z-dimensional matrix as an input of the channel feature extraction model; or combining the information (at least one of the following: the real part, the imaginary part, the amplitude, or the phase) about the channel response and other feedback information (for example, an RSRP and/or an RSTD) into an input of the channel feature extraction model.

In the present disclosure, the determining the input of the positioning information obtaining model based on the output of the channel feature extraction model includes but is not limited to: determining one input of the positioning information obtaining model based on one or more outputs of the channel feature extraction model. For example, one output of the channel feature extraction model may be used as one input of the positioning information obtaining model; or a plurality of outputs of the channel feature extraction model may be connected to form or combined into one input of the positioning information obtaining model; or one or more outputs of the channel feature extraction model and other feedback information (for example, an RSRP and/or an RSTD) may be combined into one input of the positioning information obtaining model. For example, S channel features may be represented as $S_1$, $S_2$, ..., $S_Y$, and one input of the positioning information obtaining model may include $[S_1, S_2, ... , S_Y]$ or $[S_1, S_2, ... , S_Y]^T$. For example, T channel features may be represented as S, $S_2$, ..., $S_T$, and one input of the positioning information obtaining model may include $[S_1, S_2, ... , S_T]$ or $[S_1, S_2, ..., S_T]^T$. $[\ ]^T$ represents a transposition of a matrix. Similar to the determining the input of the channel feature extraction model based on the channel response, the input of the positioning information obtaining model may further be obtained by separating the real part of the channel feature from the imaginary part and/or separating the amplitude of the channel feature from the phase. Details are not described again. A similar method may be further used to determine an input of the channel feature extraction model based on a plurality of channel responses. Details are not described again.

Optionally, in the present disclosure, for the foregoing $H_y$, $H_y$ may be further divided into a plurality of sub-channel responses, each channel response corresponds to one antenna port, and an input of the channel feature extraction model is determined based on each sub-channel response. For example, a dimension of $H_y$ is $512 \times 4 \times 16$, where 512 represents a frequency domain dimension (for example, corresponding to 512 subcarriers), 4 represents a time domain dimension (for example, corresponding to four OFDM symbols), and 16 represents a space domain dimension (for example, corresponding to 16 antenna ports), where 512, 4, and 16 are merely used as examples, and may be replaced with other integer values. The channel feature extraction model may be used to perform channel feature extraction for a channel response of each antenna port. For example, an input of the channel feature extraction model is a channel response of one antenna port, and a dimension of the input is $512 \times 4$. Alternatively, one channel feature extraction model may be used to channel feature extraction for the 16 antenna ports. For example, an input of the channel feature extraction model is channel responses of a plurality of antenna ports, and a dimension of the input is $512 \times 4 \times 16$. Different methods affect an input dimension of the channel feature extraction model, but the methods for model training and model application are similar. Similarly, for frequency domain and/or time domain, division may also be performed in a manner similar to the antenna ports. A division granularity of the frequency domain may be an integer quantity of subcarriers, an integer quantity of resource blocks (resource blocks, RBs), an integer quantity of resource block groups (resource block groups, RBGs), or another possible case. A division granularity of the time domain may be an integer quantity of OFDM symbols, an integer quantity of slots, or another possible case.

Optionally, a plurality of pairs of models (the channel feature extraction model + the positioning information obtaining model) may be trained, and an appropriate model is selected and applied as needed. Application of AI models may further take into consideration a compromise between complexity and performance. A neural network is used as an example, more layers and neurons of the network indicate higher complexity and higher performance of the AI model, but more computing resources need to be consumed. Fewer layers and neurons of the network indicate lower complexity and lower performance of the AI model, but fewer computing resources need to be consumed. An AI model can be selected by taking into consideration an actual application scenario. For example, for a UE with a high computing capability, for example, a mobile phone, a tablet computer, or an in-vehicle terminal, a more complex AI model may be used. For a UE with a low computing capability, for example, an internet of things terminal or an mMTC terminal, a slightly simple AI model or an AI model with fewer parameters may be used. Correspondingly, an appropriate AI model may also be selected based on a computing capability of an LMF.

Optionally, in the present disclosure, the input of the channel feature extraction model may further include an RSRP of a channel between a UE and a base station and/or an RSTP of the channel between the UE and the base station. Alternatively, optionally, in addition to the input of the positioning information obtaining model determined based on the output of the channel feature extraction model, the input of the positioning information obtaining model may further include the RSRP of the channel between the UE and the base station and/or the RSTP of the channel between the UE and the base station.

Optionally, operation S604: The UE sends capability information of the UE to the LMF.

The capability information of the UE indicates at least one of the following information of the UE:

- Whether the UE supports an AI-based positioning method.

For example, when the UE supports the AI-based positioning method, the LMF may determine the positioning information of the UE by using the AI-based positioning method. For example, the UE uses the channel feature extraction model provided in the present disclosure, and the LMF uses the positioning information obtaining model provided in the present disclosure to perform positioning. When the UE does not support the AI-based positioning method, the LMF may determine the location information of the UE by using a non-AI-based positioning method.

The "whether the UE supports an AI-based positioning method" may be replaced with a positioning method type supported by the UE. The type may be an AI-based positioning method or a non-AI-based positioning method.

Optionally, in the present disclosure, the AI-based positioning method may be further described as a positioning method based on a machine learning algorithm, a positioning method based on an AI model, or another name. This is not limited.

- Computing capability information of the UE.

The computing capability information of the UE may indicate a quantity of operations supported by the UE per unit time, or indicate a computing capability level of the UE. For example, a plurality of computing capability levels are agreed on in a protocol or are preconfigured by a network side (for example, a base station, an AMF, or an LMF) for the UE, and each computing capability level corresponds to the quantity of operations supported by the UE per unit time. The UE may determine the computing capability level of the UE based on the quantity of operations supported by the UE per unit time and the plurality of computing capability levels.

The network side (for example, the LMF or an AI function network element to be described below) may configure an appropriate channel feature extraction model for the UE based on the computing capability information of the UE. According to the method, the UE can work normally. For example, a computing resource used by the UE when the UE uses the channel feature extraction model to perform inference does not exceed the computing capability level of the UE or does not occupy too much computing capability of the UE. Occupying too much computing capability of the UE includes occupying 50% or more than another percentage of computing resources of the UE.

- Information about a model (AI model) supported by the UE.

The information indicates the information about the AI model supported by the UE. The information about the AI model supported by the UE may indicate whether the UE supports a specific type of AI model, or indicate whether the UE indicates a description manner of an AI model, or indicate a type of the AI model supported by the UE. For example, the information indicates whether the UE supports at least one of the following types of AI models: a fully-connected neural network, a convolutional neural network, a recursive neural network, a neural network supporting an attention mechanism, or different neural network types. According to the method, the network side may configure an appropriate model for the UE.

In the present disclosure, when the UE sends information to the LMF, for example, sends the capability information of the UE, the following method may be used.

Optionally, when the UE sends the information to the LMF, if there is a logical interface between the UE and the LMF, the information may be sent by the UE to the base station in a form of a NAS message, forwarded by the base station to a core network element A (for example, the AMF or another network element), and then forwarded by the core network element A to the LMF; or the information is sent by the UE to the base station in a form of a NAS message, and then forwarded by the base station to the LMF.

Optionally, when the UE sends the information to the LMF, if there is no logical interface between the UE and the LMF, the information may be sent by the UE to the base station in a form of a NAS message, forwarded by the base station to a core network element B (for example, the AMF or another network element), and then notified by the core network element B to the LMF; or the information may be sent by the UE to the base station in a form of a NAS message, forwarded by the base station to a core network element A, forwarded by the core network element A to a core network element B, and then notified by the core network element B to the LMF. There is a logical interface between the UE and the core network element B, and the logical interface is used to communicate the foregoing information. There is no logical interface between the UE and the core network element A, or there is a logical interface between the UE and the core network element A, but the foregoing information cannot be interpreted and communicated at the logical interface layer.

The core network element A may be one network element (one-hop forwarding) or a plurality of network elements (multi-hop forwarding).

In the present disclosure, when the LMF sends information to the UE, for example, sends information about the channel feature extraction model, which is to be described below, the LMF may send the information by using a path opposite to the foregoing method. For example, when the LMF sends the information to the UE, if there is a logical interface between the UE and the LMF, the information may be sent by the LMF to the core network element A in a form of a NAS message, forwarded by the core network element A to the base station, and then forwarded by the base station to the UE; or the information is sent by the LMF to the base station in a form of a NAS message, and then forwarded by the base station to the UE. For brevity of description, details are not described herein again.

Optionally, sending the information by the UE to the LMF may be querying (or requesting) based on the LMF. For example, the LMF sends UE capability query information to the UE. After receiving the query information, the UE reports the capability information of the UE to the LMF.

Optionally, the UE may proactively send the capability information of the UE to the LMF. For example, when the UE accesses a network, the UE proactively sends the capability information of the UE to the LMF; or when a time domain resource (for example, a periodicity and an offset (offset) in a periodicity) for reporting the capability information by the UE is agreed on in a protocol or preconfigured by the LMF, the UE sends the capability information of the UE to the LMF on the time domain resource; or when the capability information changes or when a network handover occurs, the UE sends the capability information of the UE to the LMF. A reason why the UE sends the capability information of the UE to the LMF is not limited in this application.

Operation S604 is optional. For example, if a capability of the UE is agreed on in a protocol, S604 does not need to be performed. For example, when there are UEs of a plurality of capability types in a system or the capability of the UE may change autonomously, the UE may perform S604.

Optionally, operation S605 (not shown): The positioning information obtaining model is configured. Optionally, operation S606 (not shown): The channel feature extraction model is configured. S605 and S606 may be collectively referred to as model configuration. By performing operation S605 and operation S606, the AI function network element may deploy, on the UE and the LMF, a model obtained through training.

The model configuration may be implemented by using a model configuration manner 1 or a model configuration manner 2 in the following.

Model configuration manner 1:

Optionally, operation S605a: The AI function network element sends information about the positioning information obtaining model to the LMF. Optionally, operation S606a: The AI function network element sends the information about the channel feature extraction model to the UE.

Operation S605a is optional. For example, the positioning information obtaining model is agreed on in a protocol after offline training; or the positioning information obtaining model may be downloaded from a third-party website. Therefore, S605a may be skipped.

Operation S606a is optional. For example, the channel feature extraction model is agreed on in a protocol after offline training; or the channel feature extraction model may be downloaded from a third-party website. Therefore, S606a may be skipped.

In the foregoing method, both operation S605a and operation S606a may be performed, neither operation S605a nor operation S606a may be performed, operation S605a may be performed but S606a is not performed, or operation S605a may not be performed but S606a is performed. This is not limited.

Model configuration manner 2:

Optionally, operation S605b: The AI function network element sends information about the positioning information obtaining model and the information about the channel feature extraction model to the LMF. Operation S606b: The LMF sends the information about the channel feature extraction model to the UE.

In a possible implementation, operation S605b and/or operation S606b are/is optional. For example, the positioning information obtaining model and the channel feature extraction model are agreed on in a protocol after offline training; or the positioning information obtaining model and the channel feature extraction model may be downloaded from a third-party website; or either the positioning information obtaining model or the channel feature extraction model is agreed on in a protocol after offline training, and the other may be downloaded from a third-party website.

In the present disclosure, when model information is exchanged between different network elements (denoted as a network element C and a network element D), for example, when the information about the positioning information obtaining model or the information about the channel feature extraction model is exchanged between the AI function network element and the LMF, or when the information about the channel feature extraction model is exchanged between the AI function network element and the UE, or when the information about the channel feature extraction model is exchanged between the LMF and the UE, or when the information about the channel feature extraction model is exchanged between the LMF and the base station, which is to be described below, or when the information about the channel feature extraction model is exchanged between the AI function network element and the base station, which is to be described below, an example in which the network element C sends the model information to the network element D is used, and the network element C may send at least one of the following information of the model to the network element D:

- Dimension of an input parameter of the model.
- Type of the input parameter of the model.

For example, the type of the input parameter includes a channel response, an RSRP of a channel, an RSTP of the channel, or the like.

- Gradient information of the model.

For example, the information indicates gradient information of a model sent this time relative to a reference model or relative to a model sent last time. For example, the model information previously sent by the network element C to the network element D is information A, the network element D may obtain information B based on the information A and the gradient information, and the information B provides new model information of the model. In other words, the model may be updated or reconfigured by using the gradient information of the model.

- Quantity of layers of the model.
- Inter-layer connection relationship of the model.
- Offset of a neuron of the model.
- Weight of the neuron of the model.
- Index (or identifier) of the model.
- Effective period of the model. The model is available within the effective period.

Otherwise, the model is unavailable.

Optionally, when the AI function network element is the LMF, or the AI function network element and the LMF are located in a same device, that the AI function network element sends the model information to the LMF may be implemented as follows: The LMF reads the model information.

Operation S607: The UE extracts a channel feature by using the channel feature extraction model. Operation S608: The UE sends the channel feature to the LMF. Operation S609: The LMF obtains the positioning information of the UE by using the positioning information obtaining model.

For example, as shown in FIG. 7A, similar to the foregoing descriptions of model training, the P base stations send Y downlink reference signals to the UE. The UE receives the Y reference signals. Y is an integer greater than or equal to 1, and is usually an integer greater than 1, for example, 3, 4, 5, or a larger number. For a $y^{th}$ reference signal in the Y reference signals, the UE may obtain, through measurement, a channel response of a channel through which the reference signal passes. The channel response corresponds to a channel between the UE and a base station that sends the reference signal. A value of y ranges from 1 to Y

After obtaining Y channel responses, the UE may determine an input of the channel feature extraction model based on the Y channel responses, and obtain X channel features through inference by using the channel feature extraction model. The UE sends the X channel features to the LMF. The method may be described as follows: A UE sends X channel features to an LMF, where the X channel features correspond to Y channels of the UE, the X channel features are obtained by using a channel feature extraction model, an input of the channel feature extraction model is determined based on Y channel responses, the Y channel responses are in one-to-one correspondence with the Y channels, Y is a positive integer greater than or equal to 1, and X is an integer greater than or equal to 1.

The Y channels are Y channels between the UE and P base stations. Optionally, there are E channels between each of the P base stations and the UE, and E is an integer greater than or equal to 1. Optionally, when E is greater than 1, different channels in the E channels correspond to different cells and/or frequency bands. For different base stations, values of E may be the same or may be different. This is not limited.

The LMF receives the X channel features, and determines positioning information of the UE by using the X channel features and a positioning information obtaining model. For example, the LMF determines an input of the positioning information obtaining model based on the X channel features, and obtains the positioning information of the UE through inference by using the positioning information obtaining model.

In this method, positioning is performed by using an AI model, to implement intelligent positioning, so that positioning performance is closer to an actual channel environment, thereby implementing more accurate positioning.

Optionally, X is a positive integer less than or equal to Y In comparison with reporting Y channel responses, when less than Y (X) channel features are reported, an amount of reported information can be reduced, and signaling overheads can be reduced.

Optionally, a total dimension of the X channel features is less than a total dimension of the Y channel responses. The method is a possible method for reducing the amount of reported information, and can reduce the signaling overheads between the UE and the LMF. For example, in comparison with sending a high-dimensional channel response to the LMF to determine the positioning information of the UE, in this method, sending a low-dimensional channel feature to the LMF to determine the positioning information of the UE can reduce the signaling overheads between the UE and the LMF. For example, a total dimension of the Y channel responses is $512 \times 4 \times 16$, and a total dimension of the X channel features may be reduced to 16. For example, 16 real numbers or complex numbers represent a channel feature corresponding to the channel response. This example is merely used to describe a problem, and is not intended to limit the present disclosure.

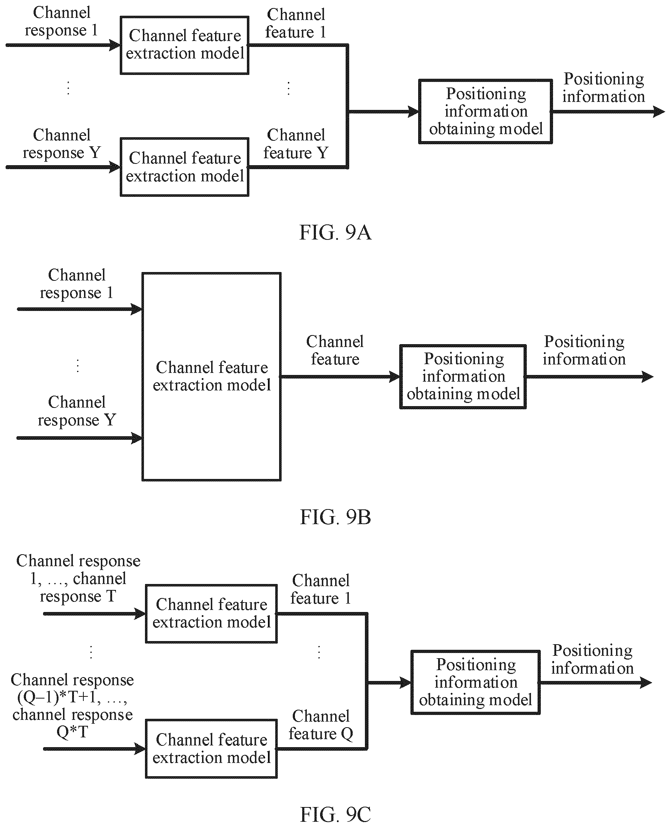

FIG. 9A, FIG. 9B, and FIG. 9C are structural diagrams in which a UE and an LMF perform positioning by using a channel feature extraction model and a positioning information obtaining model. FIG. 9A, FIG. 9B, and FIG. 9C are respectively similar to FIG. 8A, FIG. 8B, and FIG. 8C. FIG. 8A, FIG. 8B, and FIG. 8C are used for model training, and FIG. 9A, FIG. 9B, and FIG. 9C are used for model application or model inference. In FIG. 8A, FIG. 8B, and FIG. 8C, and in FIG. 9A, FIG. 9B, and FIG. 9C, the channel feature extraction model and the positioning information obtaining model work in a same manner. A difference is that in FIG. 8A, FIG. 8B, and FIG. 8C, model information of the channel feature extraction model and/or the positioning information obtaining model may be updated through training, and finally model information of a trained channel feature extraction model and/or a trained positioning information obtaining model is output; in FIG. 9A, FIG. 9B, and FIG. 9C, inference is performed by using a trained channel feature extraction model and/or a trained positioning information obtaining model, and in this process, model information of the channel feature extraction model and/or the positioning information obtaining model does not change.

Optionally, as shown in FIG. 9A, after obtaining Y channel responses $H_1, H_2, ..., H_Y$, for each of the Y channel responses, or for a $y^{th}$ channel response $H_y$, the UE determines an input $Feature\_model\_In_y$ of the channel feature extraction model. A value of y ranges from 1 to Y The UE obtains an output $Feature\_model\_Out_y$ of the channel feature extraction model through inference based on the input $Feature\_model\_In_y$ and the channel feature extraction model. $Feature\_model\_Out_y$ indicates a channel feature $S_y$. The UE may obtain a total of Y channel features $S_1, S_2, ..., S_Y$ based on the channel feature extraction model and the Y channel responses. In the method, for each channel response $H_y$, the channel feature extraction model is used to obtain the channel feature $S_y$ corresponding to the channel response. Optionally, the channel feature $S_y$ may be a real number, a vector, a matrix, or a multi-dimensional (greater than one dimension) array. This is not limited. In actual processing, the UE may have (or store) one channel feature extraction model, and the Y channel features are all obtained through inference by using the channel feature extraction model. The method can save storage resources of the UE. Alternatively, the UE may have (or store) a plurality of (for example, Y) channel feature extraction models, and at least two of the Y channel features are obtained through inference by using a same channel feature extraction model. The method can improve a processing speed of the UE.

A method for how the UE determines the input of the channel feature extraction model based on the channel response is similar to corresponding descriptions in FIG. 8A. Details are not described herein again.

The UE sends the obtained Y channel features $S_1$, $S_2$, ..., $S_Y$ to the LMF. The LMF determines an input of the positioning information obtaining model based on the Y channel features. The LMF obtains positioning information of the UE through inference based on the input and the positioning information obtaining model. For example, the LMF may obtain B inputs $Position\_model\_In_b$ of the positioning information obtaining model based on the channel features $S_1$, $S_2$, ...., $S_Y$. The LMF inputs the B inputs $Position\_model\_In_b$ into the positioning information obtaining model, to obtain a total of B outputs $Position\_model\_Out_b$ through inference. A value of b ranges from 1 to B, and B is an integer greater than or equal to 1. An output corresponding to $Position\_model\_In_b$ is $Position\_model\_Out_b$. When B is greater than 1, in actual processing, the LMF may have (or store) one positioning information obtaining model, and the plurality of inputs $Position\_model\_Out_b$ are all obtained through inference by using the positioning information obtaining model. The method can save storage resources of the LMF. Alternatively, the LMF may have (or store) a plurality of (for example, B) positioning information obtaining models, and at least two $Position\_model\_Out_b$ of the plurality of $Position\_model\_Out_b$ are obtained through inference by using a same positioning information obtaining model. The method can improve a processing speed of the LMF.

Optionally, the positioning information of the UE indicates location information of the UE.

**Example A1:**

B is equal to 1, and $Position\_model\_Out_b$ indicates at least one of a longitude, a latitude, and an altitude of the UE.

**Example B1:**

B is equal to 1, and $Position\_model\_Out_b$ indicates an offset of the UE relative to a reference location. Optionally, the input of the positioning information obtaining model may further include the reference location.

Optionally, in Example A1 and Example B1, $Position\_model\_In_b$ may include Y elements, where a $y^{th}$ element is $S_y$, and a value of y ranges from 1 to Y Alternatively, similar to the foregoing descriptions, $Position\_model\_In_b$ includes at least one of a real part, an imaginary part, an amplitude, and a response separated from the Y $S_y$.

Optionally, the positioning information of the UE indicates at least one of the following of each of the Y channels: a channel type, a first path location, or a relative azimuth of the UE. The channel type, the first path location, and/or the relative azimuth of the UE are/is used to determine the location information of the UE.

**Example C1:**

B is greater than or equal to 1, and $Position\_model\_Out_b$, b = 1, ..., B indicate a first path location [$First\_Path_1$, $First\_Path_2$, ..., $First\_Path_Y$] of each of the Y channels.

For example, B is equal to 1, $Position\_model\_In_b$ includes Y elements, where a $y^{th}$ element is $S_y$, and a value of y ranges from 1 to Y, and $Position\_model\_Out_b$ indicates the first path location of each of the Y channels.

For another example, B is greater than 1, for example, B is equal to 2, $Position\_model\_In_1$ includes Y1 elements, where a $(y1)^{th}$ element is $S_{y1}$, and a value of y1 ranges from 1 to Y1, and $Position\_model\_Out_1$ indicates the first path location of each of a $1^{st}$ channel to a $(Y1)^{th}$ channel; $Position\_model\_In_2$ includes Y2 elements, where a $(y2)^{th}$ element is $S_{Y1+y2}$, and a value of y2 ranges from 1 to Y2, and $Position\_model\_Out_2$ indicates the first path location of each of a $(Y1+1)^{th}$ channel to a $(Y1+Y2)^{th}$ channel. That B is equal to 2 is merely used as an example, and is not intended to limit the present disclosure. It may be understood that $Position\_model\_In_b$ is determined by using channel features of a group of channels, and $Position\_model\_Out_b$ indicates first path locations of the group of channels.

Optionally, $Position\_model\_Out_b$, b = 1, ..., B indicate a time domain location $First\_Path_y$ of a first path of each of the Y channels in a same time length (for example, a length of one OFDM symbol), where a value of y ranges from 1 to Y After obtaining the first path location of each channel, the LMF may obtain the location information of the UE based on first path locations of at least three channels.

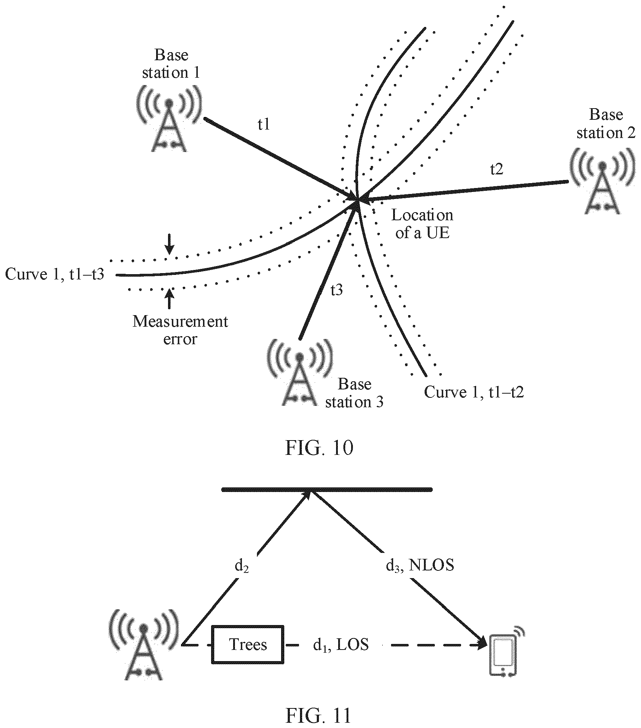

For example, FIG. 10 shows an example of estimating a location of the UE based on the first path location. In FIG. 10, a base station 1 sends a reference signal P1 to the UE through a channel 1, and time of arrival of P1 is t1; a base station 2 sends a reference signal P2 to the UE through a channel 2, and time of arrival of P2 is t2; and a base station 3 sends a reference signal P3 to the UE through a channel 3, and time of arrival of P3 is t3. t1, t2, and t3 are greater than 0. The UE may obtain, through measurement, a time difference of arrival t1-t2 or t2-t1 (t1-t2 is used as an example in the figure and the following) between P1 and P2, and obtain a time difference of arrival t1-t3 or t3-t1 (t1-t3 is used as an example in the figure and the following) between P1 and P3. The UE may report the arrival time differences t1-t2 and t1-t3 to the LMF. It is assumed that time of departure of P1 and P2 is P1_Tx_t and P2_Tx_t, respectively. P1_Tx_t and P2_Tx_t are greater than 0. In a possible implementation, P1_Tx_t and P2_Tx_t are the same as agreed on in a protocol. In another possible implementation, P1_Tx_t and P2_Tx_t may be flexibly configured. In this case, P1_Tx_t and P2_Tx_t may be the same or different. The base station 1 may send P1_Tx_t to the LMF, and the base station 2 may send P2_Tx_t to the LMF. It is assumed that time of departure of P1 and P3 is P1_Tx_t and P3_Tx_t, respectively. P3_Tx_t is greater than 0. In a possible implementation, P1_Tx_t and P3_Tx_t are the same as agreed on in a protocol. In another possible implementation, P1_Tx_t and P3_Tx_t may be flexibly configured. In this case, P1_Tx_t and P3_Tx_t may be the same or different. The base station 1 may send P1_Tx_t to the LMF, and the base station 3 may send P3_Tx_t to the LMF. The LMF may determine that a time difference of arrival between first paths of P1 and P2 is (t1 - P1_Tx_t + $First\_Path_1$) - (t2 - P2_Tx_t + $First\_Path_2$) , and determine that a time difference of arrival between first paths of P1 and P3 is (t1 - P1_Tx_t + $First\_Path_1$) - (t3 - P3_Tx_t + $First\_Path_3$) . When P1_Tx_t and P2_Tx_t are the same, (t1 - P1_Tx_t + $First\_Path_1$) - (t2 - P2_Tx_t + $First\_Path_2$) may be simplified as (t1 + $First\_Path_1$) - (t2 + $First\_Path_2$) . When P1_Tx_t and P3_Tx_t are the same, (t1 - P1_Tx_t + $First\_Path_1$) - (t3 - P3_Tx_t + $First\_Path_3$) may be simplified as (t1 + $First\_Path_1$) - (t3 + $First\_Path_3$). The LMF may determine, based on the time difference of arrival between the first paths of P1 and P3, that the location of the UE that meets the time difference of arrival is a curve 1, and may determine, based on the time difference of arrival between the first paths of P1 and P2, that the location of the UE that meets the time difference of arrival is a curve 2. Therefore, the LMF may consider that an intersection point of the curve 1 and the curve 2 is the location of the UE, in other words, the intersection point of the curve 1 and the curve 2 may be considered as a location estimated for the UE.

Optionally, when $Position\_model\_Out_b$, b = 1, ..., B indicate more than three $First\_Path_y$, the LMF may select three channels corresponding to the three $First\_Path_y$, and estimate the location of the UE according to the foregoing method. Alternatively, the LMF may estimate a plurality of locations for the UE, and determine an average value of the plurality of estimated locations as the location of the UE. Each estimated location of the UE is obtained through estimation based on the three channels corresponding to the three $First\_Path_y$.

The present disclosure does not limit a specific algorithm used by the LMF to determine the location of the UE based on the first path location, in other words, does not limit how to use an output of the positioning information obtaining model to assist the LMF in implementing a positioning function of the UE.

### Example D1:

B is greater than or equal to 1, and $Position\_model\_Out_b$, b = 1, ..., B indicate a first path location *[First_Path₁, First_Path₂, ..., First_Pathᵧ]* and a channel type of each of the Y channels. Similar to Example C1, B may be equal to 1 or greater than 1. It may be understood that $Position\_model\_In_b$ is determined by using channel features of a group of channels, and $Position\_model\_Out_b$ indicates first path locations and channel types of the group of channels.

As shown in FIG. 11, a base station sends a signal to the UE. The signal may arrive at the UE through a plurality of paths. However, because a LOS path between the base station and the UE is blocked by a tree, the UE cannot measure a signal on the LOS path. It is assumed that a first path measured by the UE is a signal that is on an NLOS path and that is reflected by the wall. If the location of the UE is estimated based on time of arrival of the signal on the NLOS path, it may be estimated that a distance between the UE and the base station is $d_2 + d_3$. However, an actual distance between the UE and the base station is $d_1$ on the LOS path. Therefore, to improve estimation accuracy of the location of the UE, when a first path between the UE and a base station is a LOS path, the location of the UE may be estimated based on a location of the first path.

In Example D1, the LMF may determine, based on the first path location of a channel whose channel type is LOS indicated by $Position\_model\_Out_b$, b = 1, ..., B, the location of the UE by using a method similar to Example C 1. For example, $Position\_model\_Out_b$, b = 1, ..., B indicate [$First\_Path_1$, $First\_Path_2$, ..., $First\_Path_8$] , and $Position\_model\_Out_b$, b = 1, ... , B indicate that a channel 1, a channel 2, a channel 4, a channel 5, a channel 7, and a channel 8 are LOS paths, and a channel 3 and a channel 6 are NLOS paths. In this case, the LMF may determine, based on *First_Path1, First_Path₂, First_Path₄, First_Path₅, First_Path₇, and First_Path₈* , the location of the UE by using the method described in Example C1.

### Example E1:

B is greater than or equal to 1, and $Position\_model\_Out_b$, b = 1, ..., B indicate a channel type of each of the Y channels. Similar to Example C1, B may be equal to 1 or greater than 1. It may be understood that $Position\_model\_In_b$ is determined by using channel features of a group of channels, and $Position\_model\_Out_b$ indicates channel types of the group of channels.

Example E1 is similar to Example D1. Different from Example D1, a first path location of each of the Y channels is not indicated by $Position\_model\_Out_b$, b = 1, ..., B, but is obtained in another manner. A specific manner is not limited. For example, to simplify calculation, first path locations of various channels are the same as agreed on in a protocol; or the first path location is reported by the UE or a corresponding base station to the LMF. For example, the UE reports the first path location of each of the Y channels, or each of Y base stations corresponding to the Y channels reports the first path location of the channel between the base station and the UE.

**Example F1:**

B is greater than or equal to 1, and *Position_model_Out$_b$*, b = 1, ..., B indicate a relative azimuth angle [*Direction$_1$*, *Direction$_2$, ..., Direction$_Y$*] of the UE corresponding to each of the Y channels.

For example, B is equal to 1, *Position_model_In$_b$* includes Y elements, where a y$^{th}$ element is S$_y$, and a value of y ranges from 1 to Y, and *Position_model_Out$_b$* indicates the azimuth angle of the UE corresponding to each of the Y channels.

For another example, B is greater than 1, for example, B is equal to 2, *Position_model_In$_1$* includes Y1 elements, where a (y1)$^{th}$ element is S$_{y1}$, and a value of y1 ranges from 1 to Y1, and *Position_model_Out$_1$* indicates a relative azimuth angle of the UE corresponding to each of a 1$^{st}$ channel to a (Y1)$^{th}$ channel; *Position_model_In$_2$* includes Y2 elements, where a (y2)$^{th}$ element is S$_{y1+y2}$, and a value of y2 ranges from 1 to Y2, and *Position_model_Out$_2$* indicates a relative azimuth angle of the UE corresponding to each of a (Y1+1)$^{th}$ channel to a (Y1+Y2)$^{th}$ channel. That B is equal to 2 is merely used as an example, and is not intended to limit the present disclosure. It may be understood that *Position_model_In$_b$* is determined by using channel features of a group of channels, and *Position_model_Out$_b$* indicates relative azimuth angles of the UE corresponding to the group of channels.

Optionally, *Position_model_Out$_b$*, b = 1, ..., B indicate the relative azimuth angle *Direction$_y$* of the UE corresponding to each of the Y channels, where a value of y ranges from 1 to Y After obtaining the relative azimuth angles of the UE corresponding to the channels, the LMF may obtain the location information of the UE based on relative azimuth angles of the UE corresponding to at least two of the channels.

For a channel, the relative azimuth angle of the UE corresponding to the channel may be an AOA and/or an AOD. For a method for how the LMF determines the location information of the UE by using the AOA and the AOD, refer to the method described in the 3GPP 38.805 protocol, for example, a DL (downlink, downlink)-AOD positioning method and a UL-AOA (uplink, uplink) positioning method described in the protocol. The present disclosure may further use another positioning method based on the AOA and the AOD. This is not limited.

Optionally, when *Position_model_Out$_b$*, b = 1, ..., B indicate more than two *Direction$_y$*, the LMF may select a part of channels corresponding to the *Direction$_y$*, and estimate the location of the UE according to the foregoing method. Alternatively, the LMF may estimate a plurality of locations for the UE, and determine an average value of the plurality of estimated locations as the location of the UE.

The present disclosure does not limit a specific algorithm used by the LMF to determine the location of the UE based on the azimuth angle of the UE, in other words, does not limit how to use an output of the positioning information obtaining model to assist the LMF in implementing a positioning function of the UE.

Optionally, as shown in FIG. 9B, after obtaining the Y channel responses $H_1$, $H_2$, ... , $H_Y$, the UE determines one input *Feature_model_In* of the channel feature extraction model based on the Y channel responses, and obtains one output *Feature_model_Out* of the channel feature extraction model through inference based on the input and the channel feature extraction model. The output indicates a channel feature S. The UE may obtain a total of one channel feature S based on the channel feature extraction model and the Y channel responses. Optionally, S may be a real number, a vector, a matrix, or a multi-dimensional (greater than one dimension) array. This is not limited. The UE sends the channel feature S to the LMF. In the method, it may be considered that the channel feature S corresponds to the Y channels.

A method for how the UE determines the input of the channel feature extraction model based on the channel responses is similar to corresponding descriptions in FIG. 8B. Details are not described herein again.

The LMF determines the input of the positioning information obtaining model based on the channel feature S. The LMF obtains the positioning information of the UE through inference based on the input and the positioning information obtaining model. For example, the LMF may obtain an input *Feature_model_In* of the positioning information obtaining model based on the channel feature S. The LMF obtains an output *Feature_model_Out* through inference based on the input and the positioning information obtaining model. *Feature_model_Out* indicates the positioning information of the UE.

Optionally, the positioning information of the UE indicates the location information of the UE, or indicates a channel type and/or a first path location of each of the Y channels. The channel type and/or the first path location are/is used to determine the location information of the UE. The channel type and/or the first path location are/is used to assist the LMF in determining the location information of the UE. The descriptions of *Feature_model_Out* are similar to those in FIG. 9A. Details are not described again. In FIG. 9A and FIG. 9B, the input and the output of the channel feature extraction model are different, but a processing idea thereof is similar. In FIG. 9A, for the Y channels, the LMF side may perform processing by using one or more positioning information obtaining models. In FIG. 9B, for the Y channels, the LMF side may perform processing by using one positioning information obtaining model.

Optionally, as shown in FIG. 9C, after obtaining Y channel responses $H_1$, $H_2$, ... , $H_Y$, the UE may determine a total of Q inputs of the channel feature extraction model based on the Y channel responses, where each input is determined by T channel responses in the Y channel responses, Q and T are positive integers, and Q × T = Y. For a $q^{th}$ input in the Q inputs, the UE obtains an output of the channel feature extraction model based on the input and the channel feature extraction model, where the output indicates a channel feature $S_q$, and a value of q ranges from 1 to Q.

Optionally, the channel feature $S_q$ may be a real number, a vector, a matrix, or a multi-dimensional (greater than one dimension) array. This is not limited. The UE may obtain a total of Q channel features $S_1$, $S_2$, ... , $S_Q$ based on the channel feature extraction model and the Y channel responses. It may be considered that the Q channel features correspond to the Y channels. In the method, for every T channel responses, the channel feature extraction model is used to obtain one channel feature $S_q$ corresponding to the T channel responses. In actual processing, the UE may store one channel feature extraction model, and each of the Q inputs is sequentially inferred based on the channel feature extraction model. Alternatively, the UE may store a plurality of (for example, Q) channel feature extraction models, and at least two of the Q inputs are inferred based on different channel feature extraction models. This is not limited.

The UE sends the Q channel features $S_1$, $S_2$, ... $S_Q$ to the LMF. The LMF determines an input of the positioning information obtaining model based on $S_1$, $S_2$, ...,$S_Q$. The LMF obtains the positioning information of the UE through inference based on the input and the positioning information obtaining model. For example, the LMF may obtain N inputs $Position\_model\_In_n$ of the positioning information obtaining model based on the channel features $S_1$, $S_2$,..., $S_Q$, where a value of n ranges from 1 to N, and N is an integer greater than or equal to 1. The LMF inputs the N inputs $Position\_model\_In_n$ into the positioning information obtaining model, to obtain N outputs $Position\_model\_Out_n$ through inference. A value of n ranges from 1 to N. An output corresponding to $Position\_model\_In_n$ is $Position\_model\_Out_n$.

Similar to the descriptions in FIG. 9A, N = 1, and $Position\_model\_Out_n$ indicates the location information of the UE. Alternatively, N is greater than or equal to 1, and $Position model\_Out_n$, n = 1, ..., N indicate a channel type and/or a first path location of each of the Y channels. The channel type and/or the first path location are/is used to assist the LMF in determining the location information of the UE. The descriptions of $Position\_model\_Out_n$ are similar to those in FIG. 9A. Details are not described again. In FIG. 9A and FIG. 9C, the input and the output of the channel feature extraction model are different, but a processing idea thereof is similar.

FIG. 8A, FIG. 8B, FIG. 8C, FIG. 9A, FIG. 9B, and FIG. 9C are used to illustrate architectures of the channel feature extraction model and the positioning information obtaining model, and are not intended to limit the present disclosure.

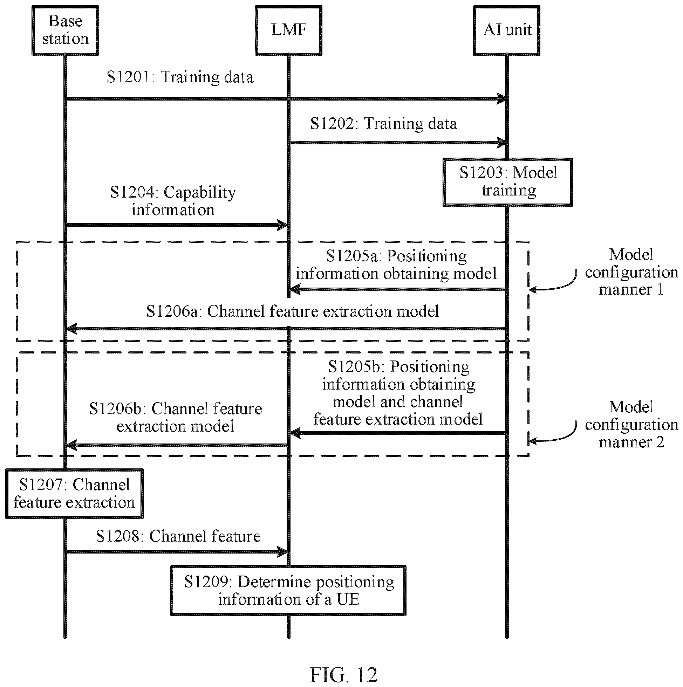

FIG. 12 is a flowchart of a second positioning method according to the present disclosure. The method includes the following operations.

Optionally, operation S1201: A base station sends training data to an AI function network element. Optionally, operation S1202: An LMF sends training data to the AI function network element. Optionally, operation S1203: The AI function network element performs model training by using the training data.

The AI function network element may perform training through a model training process by using the training data, to obtain a channel feature extraction model and a positioning information obtaining model. The training data may be sent by the base station and/or the LMF to the AI function network element.

In the present disclosure, when the base station exchanges information with the AI function network element, for example, when the base station sends the training data to the AI function network element or when the following AI function network element sends information about the channel feature extraction model to the base station, the AI function network element directly communicates with the base station in a wired or wireless manner, or the AI function network element communicates with the base station through forwarding by another network element (for example, a core network element, which is not limited).

Operations S1201, S1202, and S1203 are optional. For example, the channel feature extraction model and the positioning information obtaining model are agreed on in a protocol after offline training. Alternatively, the channel feature extraction model and the positioning information obtaining model are downloaded from a third-party website. In this case, S1201, S1202, and S1203 may be skipped.

Optionally, operation S1201 and operation S1203 are performed, but S1202 is not performed; or operation S1202 and operation S1203 are performed, but S1201 is not performed; or operations S1201, S1202, and S1203 are all performed. In operation S1202, the training data sent by the base station to the AI function network element may be measured by the base station and/or reported by a UE to the base station by using signaling. In operation S1202, the training data sent by the LMF to the AI function network element may be sent by the UE and/or the base station to the LMF.

The training data obtained by the AI function network element includes training data used to determine an input of the channel feature extraction model and a label corresponding to the input. The label corresponding to the input may be understood as a target output or an ideal output of the positioning information obtaining model. For example, when the input of the channel feature extraction model is determined based on training data A, the target output of the positioning information obtaining model is a label corresponding to the training data A.

Optionally, the training data used to determine the input of the channel feature extraction model includes at least one of the following:

- Channel response between the UE and the base station.

Optionally, the information is measured by the UE and then sent to the base station or the LMF, and is sent by the base station or the LMF to the AI function network element. For a specific measurement method, refer to the corresponding descriptions in FIG. 6.

Optionally, the information is measured by the base station and then sent to the LMF or the AI function network element, and optionally, is sent by the LMF to the AI function network element. For a specific measurement method, refer to the corresponding descriptions in FIG. 6.

- RSRP of a channel between the UE and the base station.

Optionally, the information is measured by the UE and then sent to the LMF or the base station, and is sent by the LMF or the base station to the AI function network element. For a specific measurement method, refer to the corresponding descriptions in FIG. 6.

Optionally, the information is measured by the base station and then sent to the LMF or the AI function network element, and optionally, is sent by the LMF to the AI function network element. For a specific measurement method, refer to the corresponding descriptions in FIG. 6.

- RSTP of the channel between the UE and the base station.

The information is measured by the UE and then sent to the LMF or the base station, and is sent by the LMF or the base station to the AI function network element. For a specific measurement method, refer to the corresponding descriptions in FIG. 6.

- Type of an environment in which the UE is located.

For descriptions of the environment type, refer to the corresponding descriptions in FIG. 6. The information may be reported by the UE to the LMF or the base station, and sent by the LMF or the base station to the AI function network element; or the information may be sent by the base station to the AI function network element or the LMF, and optionally, sent by the LMF to the AI function network element.

Optionally, in the training data, the target output of the positioning information obtaining model includes at least one of the following:

- Location information of the UE.

For descriptions of the location information, refer to the corresponding descriptions in FIG. 6.

Optionally, the UE is a beacon UE. The UE knows the location information of the UE, and the UE reports the location information to the LMF or the base station, and then the LMF or the base station sends the location information to the AI function network element. Alternatively, the base station knows the location information of the UE, and the base station sends the location information to the AI function network element or the LMF, and then optionally, the LMF sends the location information to the AI function network element. Alternatively, the LMF knows the location information of the UE, and the LMF sends the location information to the AI function network element.

Optionally, the LMF obtains the location information of the UE by using a non-AI-based positioning method, and sends the location information to the AI function network element. For descriptions of the non-AI-based positioning method, refer to the corresponding descriptions in FIG. 6.

- Type of the channel between the UE and the base station.

Optionally, an example in which P is equal to Y is used, and the UE is a beacon UE. The UE knows a channel type of a channel between the UE and a $y^{th}$ base station, the UE sends the channel type to the LMF or the base station, and the UE sends a total of Y channel types, and then the LMF or the base station sends the Y channel types to the AI function network element. Alternatively, a $y^{th}$ base station knows a channel type of a channel between the UE and the $y^{th}$ base station, the $y^{th}$ base station sends the channel type to the AI function network element or the LMF, and a total of Y base stations send the channel type to the AI function network element or the LMF, and then the AI function network element or the LMF receives a total of Y channel types, and optionally, the LMF sends the Y channel types to the AI function network element. Alternatively, the LMF knows a channel type of a channel between the UE and a $y^{th}$ base station, the LMF sends the channel type to the AI function network element, and the LMF sends a total of Y channel types. A value of y ranges from 1 to Y Similar to the corresponding descriptions in FIG. 6, when P is not equal to Y, the method is similar.

Optionally, an example in which P is equal to Y is used. The LMF obtains the channel type of the channel between the UE and the $y^{th}$ base station by using the non-AI-based positioning method, and sends the channel type to the AI function network element. The LMF sends a total of Y channel types. A value of y ranges from 1 to Y For descriptions of the non-AI-based positioning method, refer to the corresponding descriptions in FIG. 6. Similar to the corresponding descriptions in FIG. 6, when P is not equal to Y, the method is similar.

- First path location of the channel between the UE and the base station.

A method for determining the first path location of the channel between the UE and the base station and a reporting method are similar to the foregoing descriptions of the "type of the channel between the UE and the base station." The channel type is replaced with the first path location. Details are not described herein again.

Same as the corresponding descriptions in FIG. 6, the AI function network element obtains a plurality of pieces of training data corresponding to at least one UE. The plurality of pieces of training data may be considered as one training data set. Model training is performed by using the training data set, to obtain the channel feature extraction model and the positioning information obtaining model.

In the present disclosure, same as the corresponding descriptions in FIG. 6, a UE configured to perform model training and a UE configured to perform model inference may be the same (as shown in the figure in the present disclosure), or may be different. This is not limited. For example, the UE described in operation S1201, operation S1202, and operation S 1203 is a first UE, and the UE described in operations S1207, S1208, and S1209 is a second UE. The first UE and the second UE may be the same, or may be different. Regardless of whether the first UE and the second UE are the same, a base station configured to perform model training and a base station configured to perform model inference may be the same (as shown in the figure in the present disclosure), or may be different. This is not limited. For example, a model training process (for example, operation S1201) relates to a first group of P base stations, and a model application process (for example, operation S1207) relates to a second group of P base stations. For descriptions of the first group of P base stations and the second group of P base stations, refer to the corresponding descriptions in FIG. 6. Details are not described herein again. Same as the corresponding descriptions in FIG. 6, the AI function network element may perform model training or model update training by using the training data set. In the method shown in FIG. 12, a process in which the AI function network element performs model training or model update training by using the training data set is the same as that shown in FIG. 8A. Details are not described herein again.

Optionally, similar to the descriptions in FIG. 6, a plurality of pairs of models (the channel feature extraction model + the positioning information obtaining model) may be trained, and an appropriate model is selected and applied as needed. An AI model can be selected by taking into consideration an actual application scenario. For example, for a base station with a high computing capability, for example, a macro base station, a more complex AI model may be used. For a base station with a low computing capability, for example, a small cell or a micro base station, a slightly simple AI model or an AI model with fewer parameters may be used. Correspondingly, an appropriate AI model may also be selected based on a computing capability of the LMF.

Optionally, operation S 1204: The base station sends capability information of the base station to the LMF.

The capability information of the base station indicates at least one of the following information of the base station:

- Whether the base station supports an AI-based positioning method.

For example, when the base station supports the AI-based positioning method, the LMF may determine positioning information of the UE by using the AI-based positioning method. For example, the base station uses the channel feature extraction model provided in the present disclosure, and the LMF uses the positioning information obtaining model provided in the present disclosure to perform positioning. When the base station does not support the AI-based positioning method, the LMF may determine location information of the UE by using the non-AI-based positioning method.

The "whether the base station supports an AI-based positioning method" may be replaced with a positioning method type supported by the base station. The type may be an AI-based positioning method or a non-AI-based positioning method.

- Computing capability information of the base station.

Similar to the computing capability information of the UE in the method shown in FIG. 6, the UE is replaced with the base station.

- AI model supporting capability information of the base station.

Similar to the AI model supporting capability information of the UE in the method shown in FIG. 6, the UE is replaced with the base station.

In the present disclosure, when the base station sends information to the LMF, for example, sends the capability information of the base station, the following method may be used.

Optionally, when the base station sends the information to the LMF, if there is an interface between the base station and the LMF, the base station may send the information to the LMF. If there is no interface between the base station and the LMF, the LMF may send the information to a core network element E (for example, an AMF or another network element), and then the core network element E forwards the information to the LMF. The core network element E may be one network element (one-hop forwarding) or a plurality of network elements (multi-hop forwarding).

In the present disclosure, when the LMF sends information to the base station, for example, sends the information about the channel feature extraction model, which is to be described below, the LMF may send the information by using a path opposite to the foregoing method. For example, when the LMF sends the information to the base station, if there is an interface between the base station and the LMF, the LMF sends the information to the base station. If there is no interface between the base station and the LMF, the LMF may send the information to a core network element E (for example, an AMF or another network element), and then the core network element E forwards the information to the base station.

Optionally, sending the information by the base station to the LMF may be querying (or requesting) based on the LMF. For example, the LMF sends base station capability query information to the base station. After receiving the query information, the base station reports the capability information of the base station to the LMF. Alternatively, the base station may proactively send the capability information of the base station to the LMF. For example, during network deployment, the base station proactively sends the capability information of the base station to the LMF; or when the capability information changes, the base station sends the capability information of the base station to the LMF. This is not limited.

Operation S1204 is optional. For example, if a capability of the base station is agreed on in a protocol, S1204 does not need to be performed. For example, when there are base stations of a plurality of capability types in a system or the capability of the base station may change autonomously, the base station may perform S1204.

Optionally, operation S1205 (not shown): The positioning information obtaining model is configured. Optionally, operation S1206 (not shown): The channel feature extraction model is configured. S1205 and S1206 may be collectively referred to as model configuration.

The model configuration may be implemented by using a model configuration manner 1 or a model configuration manner 2 in the following.

Model configuration manner 1:

Optionally, operation S1205a: The AI function network element sends information about the positioning information obtaining model to the LMF. Optionally, operation S1206a: The AI function network element sends the information about the channel feature extraction model to the base station.

Optionally, the AI function network element and the base station are connected in a wired or wireless manner, or the AI function network element and the base station communicate with each other through forwarding by another network element (for example, a core network element, which is not limited).

For descriptions of optionality of operation S 1205a and operation S 1206a, refer to the corresponding descriptions in FIG. 6. Details are not described herein again.

Model configuration manner 2:

Optionally, operation S1205b: The AI function network element sends information about the positioning information obtaining model and the information about the channel feature extraction model to the LMF. Operation S1206b: The LMF sends the information about the channel feature extraction model to the base station.

For descriptions of optionality of operation S1205b and operation S1206b, refer to the corresponding descriptions in FIG. 6. Details are not described herein again.

Operation S1207: The base station extracts a channel feature by using the channel feature extraction model. Operation S1208: The base station sends the channel feature to the LMF. Operation S1209: The LMF determines the positioning information of the UE by using the positioning information obtaining model.

For example, as shown in FIG. 7B, an example in which P is equal to Y and the UE sends one reference signal to each base station is used. The UE sends uplink reference signals to Y (a case in which three are shown in FIG. 7B is used as an example for description) base stations. The Y base stations receive the uplink reference signals, respectively.

Y is an integer greater than or equal to 1, and is usually an integer greater than 1, for example, 3, 4, 5, or a larger number. After receiving the uplink reference signal, the $y^{th}$ base station in the Y base stations may estimate or calculate, based on a sending sequence value of the reference signal known to the $y^{th}$ base station and a sequence value of the reference signal received by the base station, a channel response $H_y$ of a channel through which the reference signal passes. The channel response $H_y$ corresponds to a channel between the UE and the $y^{th}$ base station. A value of y ranges from 1 to Y A case in which P is not equal to Y is similar to the foregoing descriptions. Details are not described herein again. When P is not equal to Y, the P base stations obtain a total of Y channel responses of Y channels between the P base stations and the UE through estimation.

After obtaining E channel responses corresponding to each base station, each base station may obtain E channel features based on the channel responses and the channel feature extraction model, where each channel feature corresponds to one channel response. The base station sends the E channel features to the LMF. For each base station, the method may be described as follows: A base station sends E channel features to an LMF, where the E channel features correspond to E channels between a UE and the base station, each channel feature is obtained by using a channel feature extraction model, an input of the channel feature extraction model is determined based on a channel response, and the channel response corresponds to a channel corresponding to the channel feature. E is an integer greater than or equal to 1, and values of E corresponding to different base stations may be the same or may be different. A total of P base stations send Y channel features to the LMF.

The LMF receives a total of Y channel features from the P base stations, and determines positioning information of the UE by using the Y channel features and a positioning information obtaining model. For example, the LMF determines an input of the positioning information obtaining model based on the Y channel features, and obtains the positioning information of the UE through inference by using the positioning information obtaining model.

In this method, positioning is performed by using an AI model, to implement intelligent positioning, so that the positioning is closer to an actual channel environment, thereby implementing more accurate positioning.

Optionally, a dimension of the channel feature sent by the base station to the LMF is less than a dimension of a corresponding channel response. According to the method, signaling overheads between the base station and the LMF can be reduced.

An example in which P is equal to Y is used. FIG. 9A is a structural diagram in which a base station and an LMF perform positioning by using a channel feature extraction model and a positioning information obtaining model.

As shown in FIG. 9A, a $y^{th}$ base station (or referred to as a base station y) obtains a channel response $H_y$, and determines an input $Feature\_model\_In_y$ of the channel feature extraction model based on $H_y$, where a value of y ranges from 1 to Y The base station y obtains an output $Feature\_model\_Out_y$ of the channel feature extraction model based on $Feature\_model\_In_y$ and the channel feature extraction model of the base station. $Feature\_model\_Out_y$ indicates a channel feature $S_y$. The base station sends $S_y$ to the LMF. The LMF receives a total of Y channel features of Y base stations. The Y channel features are denoted as $S_1, S_2, ... , S_Y$. The LMF may obtain an input of the positioning information obtaining model based on the channel features $S_1, S_2, ... , S_Y$, and obtain positioning information of the UE through inference by using the positioning information obtaining model. A method for how the LMF determines the positioning information and location information of the UE based on $S_1, S_2, ... , S_Y$ is similar to the corresponding descriptions in FIG. 6. Details are not described again.

In the methods in FIG. 6 and FIG. 12, the training data is collected, and the channel feature extraction model and the positioning information obtaining model are obtained through training by using the collected data. In the present disclosure, a reference data set and a reference model (including a reference channel feature extraction model and a reference positioning information obtaining model) may further be provided. The UE, the base station, and the LMF may perform inference by using the reference model, to obtain the positioning information of the UE. Alternatively, the UE or the base station may perform update training on the reference channel feature extraction model by using an offline training or online training method, to obtain an updated channel feature extraction model, and/or the LMF may perform update training on the reference positioning information obtaining model by using the/an offline training or online training method, to obtain an updated positioning information obtaining model. The positioning information of the UE is obtained through inference by using the updated channel feature extraction model and the reference positioning information obtaining model, or by using the reference channel feature extraction model and the updated positioning information obtaining model, or by using the updated channel feature extraction model and the updated positioning information obtaining model.

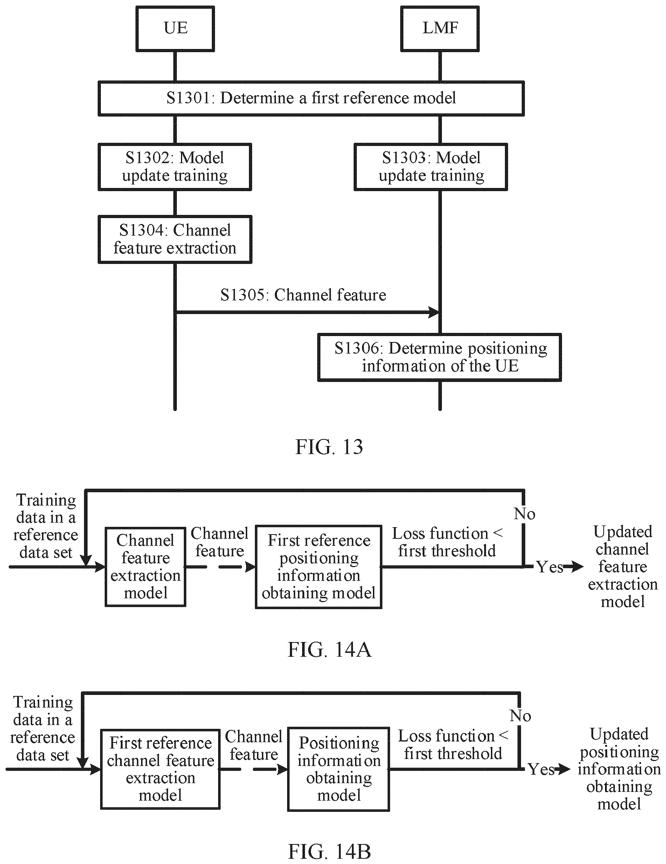

FIG. 13 is a flowchart of a third positioning method according to the present disclosure. The method includes the following operations.

Operation S1301: A UE and an LMF determine a first reference model.

The first reference model includes a first reference channel feature extraction model and a first reference positioning information obtaining model. The first reference model may be used by the UE and the LMF to determine positioning information of the UE.

In the present disclosure, the first reference model may be determined by using any one of the following methods.

First reference model determining method 1:

The first reference model is agreed on in a protocol. It may be considered that the first reference model is agreed on in the protocol after offline training. Optionally, a reference data set, a loss function, and a first threshold are agreed on in the protocol.

For detailed descriptions of the reference data set, the loss function, and the first threshold, refer to the following operation S1302.

First reference model determining method 2:

An AI function network element obtains the first reference model through training by using the method described in operations S601, S602, and S603. The AIfunction network element sends information about the first reference model to the UE and the LMF; or the AI function network element sends information about the first reference model to the LMF, and the LMF sends the information about the first reference model to the UE. Optionally, the AI function network element further indicates at least one of a reference data set, a loss function, or a first threshold to the UE and the LMF. For example, the AI function network element indicates the reference data set to the UE and the LMF, or the AI function network element indicates the reference data set to the LMF, and the LMF indicates the first reference data set to the UE; and the loss function and the first threshold are agreed on in the protocol. Other possible cases are not provided one by one.

First reference model determining method 3:

The UE determines the first reference model from W reference models, where W is an integer greater than or equal to 1. The UE sends an index of the first reference model to the LMF, and the LMF determines the first reference model from the W reference models based on the index.

Optionally, the UE selects the first reference model from the W reference models based on computing capability information of the UE. For descriptions of the computing capability information of the UE, refer to the corresponding descriptions in FIG. 6. For example, the W reference models are different in structural complexity, and a more complex structure needs a higher computing capability. The UE selects, from the W reference models based on the computing capability of the UE, the first reference model that needs a computing capability no higher than the computing capability of the UE.

Optionally, each reference model (denoted as a reference model A) in the W reference models corresponds to a group of parameter configurations, and the group of parameter configurations include at least one of the following: a transmit antenna port quantity corresponding to a channel response, a receive antenna port quantity corresponding to the channel response, a bandwidth corresponding to the channel response, or an OFDM symbol quantity corresponding to the channel response. The channel response is used to determine an input of a channel feature extraction model of the reference model A. There is at least one different parameter configuration in two groups of parameter configurations corresponding to two different reference models, as shown in some examples in Table 1 to Table 5. These examples do not constitute a limitation on the present disclosure. The UE selects the appropriate first reference model from the W reference models based on a parameter configuration of the UE (for example, a transmit antenna port quantity, a receive antenna port quantity, a bandwidth capability, and/or a maximum quantity of processed time-domain OFDM symbols), or the UE selects the appropriate first reference model from the W reference models based on a measurement configuration of the UE (for example, a measurement antenna port quantity, a measurement bandwidth, and/or a quantity of measurement time-domain OFDM symbols).

**Table 1**

| Reference model | Parameter configuration (receive antenna port quantity corresponding to a channel response) |
|---|---|
| Reference model 1 | Antenna port quantity 1 |
| Reference model 2 | Antenna port quantity 2 |
| Reference model 3 | Antenna port quantity 3 |

**Table 2**

| Reference model | Parameter configuration (bandwidth corresponding to a channel response) |
|---|---|
| Reference model 1 | Bandwidth 1 |
| Reference model 2 | Bandwidth 2 |

**Table 3**

| Reference model | Parameter configuration (OFDM symbol quantity corresponding to a channel response) |
|---|---|
| Reference model 1 | OFDM symbol quantity 1 |
| Reference model 2 | OFDM symbol quantity 2 |
| Reference model 3 | OFDM symbol quantity 3 |
| Reference model 4 | OFDM symbol quantity 4 |

**Table 4**

| Reference model | Parameter configuration (receive antenna port quantity corresponding to a channel response and bandwidth corresponding to the channel response) |
|---|---|
| Reference model 1 | Antenna port quantity 1 and bandwidth 1 |
| Reference model 2 | Antenna port quantity 2 and bandwidth 1 |
| Reference model 3 | Antenna port quantity 2 and bandwidth 2 |

**Table 5**

| Reference model | Parameter configuration (receive antenna port quantity corresponding to a channel response, bandwidth corresponding to the channel response, and OFDM symbol quantity corresponding to the channel response) |
|---|---|
| Reference model 1 | Antenna port quantity 1, bandwidth 1, and OFDM symbol quantity 1 |
| Reference model 2 | Antenna port quantity 1, bandwidth 1, and OFDM symbol quantity 2 |
| Reference model 3 | Antenna port quantity 2, bandwidth 2, and OFDM symbol quantity 1 |
| Reference model 4 | Antenna port quantity 2, bandwidth 2, and OFDM symbol quantity 2 |
| Reference model 5 | Antenna port quantity 3, bandwidth 3, and OFDM symbol quantity 3 |

Optionally, each reference model (denoted as the reference model A) in the W reference models corresponds to a group of application scenarios, and the group of application scenarios include at least one of the following scenarios: eMBB, URLLC, mMTC, D2D, V2X, MTC, IoT, virtual reality, augmented reality, industrial control, autonomous driving, telemedicine, smart grid, smart furniture, smart office, smart wearable, intelligent transportation, smart city, or the like. There is at least one different application scenario in the group of application scenarios corresponding to each reference model, as shown in Table 6. The UE selects the first reference model from the W reference models based on the application scenario of the UE.

**Table 6**

| Reference model | Application scenario |
|---|---|
| Reference model 1 | MTC, mMTC, industrial control, D2D, and IoT |
| Reference model 2 | Autonomous driving, telemedicine, and URLLC |
| Reference model 3 | eMBB |

(continued)

| Reference model | Application scenario |
|---|---|
| Reference model 4 | Smart grid, smart furniture, smart office, smart wearable, intelligent transportation, or smart city |

Optionally, each reference model (denoted as the reference model A) in the W reference models corresponds to a group of application environments, and the group of application environments include at least one of the following environments: a factory environment, an office environment, a high-speed railway environment, a metro environment, or the like. There is at least one different application environment in the group of application environments corresponding to each reference model, as shown in Table 7. The UE selects the first reference model from the W reference models based on an environment in which the UE is located.

**Table 7**

| Reference model | Application environment |
|---|---|
| Reference model 1 | Factory environment |
| Reference model 2 | Office environment |
| Reference model 3 | High-speed railway environment and metro environment |

Optionally, the W reference models may be agreed on in a protocol. Optionally, a reference data set, a loss function, and a first threshold that correspond to each reference model are further agreed on in the protocol. Optionally, the W reference models correspond to a same loss function and/or a same first threshold.

Optionally, the W reference models may be indicated by the AI function network element to the UE and the LMF. The indication method is similar to the corresponding descriptions in the first reference model determining method 2. Optionally, the AI function network element further indicates, to the UE and the LMF, at least one of the reference data set, the loss function, or the first threshold corresponding to each reference model. Optionally, the loss function and/or the first threshold corresponding to each reference model are/is agreed on in the protocol. Optionally, the W reference models correspond to a same loss function and/or a same first threshold.

Optionally, operation S1302: The UE performs model update training based on the first reference model and the first reference data set, to obtain an updated channel feature extraction model.

The first reference data set includes a plurality of pieces of training data and a label corresponding to each piece of training data. For descriptions of the training data and the label, refer to the corresponding descriptions in FIG. 6. The UE obtains the updated channel feature extraction model through training by using the model training method described in operation S603. In operation S603, the training data is collected from the UE and/or the LMF, and in a training process, parameters of both the channel feature extraction model and the positioning information obtaining model may be updated. In operation S1302, as shown in FIG. 14A, the training data is provided by the reference data set, and in a training process, a parameter of the channel feature extraction model may be updated, where an initial model of the channel feature extraction model is the first reference channel feature extraction model, but a parameter of a positioning information obtaining model is not updated, in other words, the positioning information obtaining model is the first reference positioning information obtaining model. In the training process, iterative training is performed on the first reference channel feature extraction model by using the training data in the reference data set, to obtain the updated channel feature extraction model. Objectives of the training are to determine an input of the updated channel feature extraction model by using the training data in the reference data set, and ensure that the loss function between an output of the first reference positioning information obtaining model and the label of the training data is less than or less than or equal to the first threshold when the updated channel feature extraction model and the first reference positioning information obtaining model are used in a matched manner.

Optionally, operation S1303: The LMF performs model update training based on the first reference model and the first reference data set, to obtain an updated positioning information obtaining model.

The first reference data set includes a plurality of pieces of training data and a label corresponding to each piece of training data. For descriptions of the training data and the label, refer to the corresponding descriptions in FIG. 6. The LMF obtains the updated positioning information obtaining model through training by using the model training method described in operation S603. In operation S603, the training data is collected from the UE and/or the LMF, and in a training process, parameters of both the channel feature extraction model and the positioning information obtaining model may be updated. In operation S1303, as shown in FIG. 14B, the training data is provided by the reference data set, and in a training process, a parameter of the channel feature extraction model is not updated, in other words, the channel feature extraction model is the first reference channel feature extraction model, but the positioning information obtaining model may be updated, where an initial model of the positioning information obtaining model is the first reference positioning information obtaining model. In the training process, iterative training is performed on the first reference positioning information obtaining model by using the training data in the reference data set, to obtain the updated positioning information obtaining model. Objectives of the training are to determine an input of the first reference channel feature extraction model by using the training data in the reference data set, and ensure that the loss function between an output of the updated positioning information obtaining model and the label of the training data is less than or less than or equal to the first threshold when the first reference channel feature extraction model and the updated positioning information obtaining model are used in a matched manner.

Optionally, when there are W reference models, the LMF may determine the first reference model first and then train the channel feature extraction model based on the first reference model. Alternatively, the LMF may obtain a corresponding channel feature extraction model in advance through training based on each reference model in the W reference models. When the first reference model is determined, the channel feature extraction model trained based on the first reference model may be obtained.

Operation S1304: The UE extracts a channel feature by using the channel feature extraction model. Operation S1305: The UE sends the channel feature to the LMF.

In this operation, if S1302 is not performed, the channel feature extraction model is the first reference channel feature extraction model; or if S1302 is performed, the channel feature extraction model is the updated channel feature extraction model.

Optionally, when there are W reference models, the UE may determine the first reference model first and then train the channel feature extraction model based on the first reference model. Alternatively, the UE may obtain a corresponding channel feature extraction model in advance through training based on each reference model in the W reference models. When the first reference model is determined, the channel feature extraction model trained based on the first reference model may be obtained.

Specific implementations of S1304 and S1305 are similar to the corresponding descriptions in FIG. 6. Details are not described herein again.

Operation S1306: The LMF determines the positioning information of the UE by using the positioning information obtaining model.

In this operation, if S1303 is not performed, the positioning information obtaining model is the first reference positioning information obtaining model; or if S1303 is performed, the positioning information obtaining model is the updated positioning information obtaining model. A specific implementation of S1306 is similar to the corresponding descriptions in FIG. 6. Details are not described herein again.

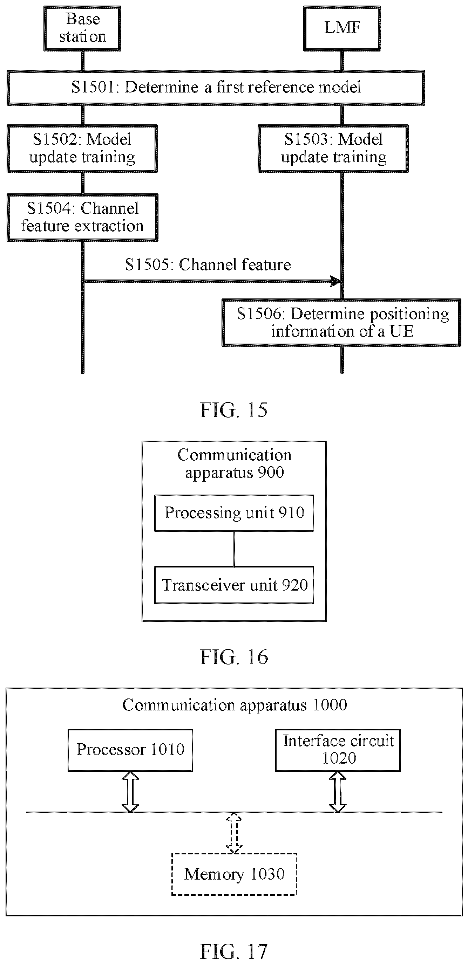

FIG. 15 is a flowchart of a fourth positioning method according to the present disclosure. The method includes the following operations.

Operation S1501: A base station and an LMF determine a first reference model.

The first reference model includes a first reference channel feature extraction model and a first reference positioning information obtaining model. The first reference model is used by the base station and the LMF to determine positioning information of a UE.

The base station and the LMF may determine the first reference model by using any one of the following methods.

First reference model determining method 1: Same as the corresponding descriptions in FIG. 13.

First reference model determining method 2: Similar to the corresponding descriptions in FIG. 13, the UE is replaced with the base station.

First reference model determining method 3:

The base station determines the first reference model from W reference models, where W is an integer greater than 1. The base station sends an index of the first reference model to the LMF, and the LMF determines the first reference model from the W reference models based on the index.

Optionally, the base station selects the first reference model from the W reference models based on computing capability information of the base station. For descriptions of the computing capability information of the base station, refer to the corresponding descriptions in FIG. 12. For example, the W reference models are different in structural complexity, and a more complex structure needs a higher computing capability. The base station selects, from the W reference models based on the computing capability of the base station, the first reference model that needs a computing capability no higher than the computing capability of the base station.

Optionally, each reference model (denoted as a reference model A) in the W reference models corresponds to a group of parameter configurations, and the group of parameter configurations include at least one of the following: a transmit antenna port quantity corresponding to a channel response, a receive antenna port quantity corresponding to the channel response, a bandwidth corresponding to the channel response, or an OFDM symbol quantity corresponding to the channel response. The channel response is used to determine an input of a channel feature extraction model of the reference model A. There is at least one different parameter configuration in a group of parameter configurations corresponding to each reference model, as shown in some examples in Table 1 to Table 5. The base station selects the appropriate first reference model from the W reference models based on a parameter configuration of the base station (for example, a transmit antenna port quantity, a receive antenna port quantity, a bandwidth capability, and/or a maximum quantity of processed time-domain OFDM symbols), or the base station selects the appropriate first reference model from the W reference models based on measurement information of the base station (for example, a measurement antenna port quantity, a measurement bandwidth, and/or a quantity of measurement time-domain OFDM symbols).

Optionally, each reference model (denoted as the reference model A) in the W reference models corresponds to a group of application scenarios of the UE. For descriptions of the application scenarios, refer to the corresponding descriptions in FIG. 13. There is at least one different application scenario in the group of application scenarios corresponding to each reference model, as shown in Table 6. The base station selects the first reference model from the W reference models based on the application scenario of the UE. Optionally, the application scenario of the UE learned by the base station is, for example, determined based on a service type of the UE, or reported by the UE to the base station. This is not limited.

Optionally, each reference model (denoted as the reference model A) in the W reference models corresponds to a group of application environments. For descriptions of the application scenarios, refer to the corresponding descriptions in FIG. 13. There is at least one different application environment in the group of application environments corresponding to each reference model, as shown in Table 7. The base station selects the first reference model from the W reference models based on an environment in which the UE is located. Optionally, the environment in which the UE is located and that is learned by the base station is, for example, obtained through estimation based on measurement information corresponding to the UE, or reported by the UE to the base station. This is not limited.

Optionally, the W reference models may be agreed on in a protocol. Optionally, a reference data set, a loss function, and a first threshold that correspond to each reference model are further agreed on in the protocol. Optionally, the W reference models correspond to a same loss function and/or a same first threshold.

Optionally, the W reference models may be indicated by an AI function network element to the base station and the LMF. The indication method is similar to the corresponding descriptions in the first reference model determining method 2. Optionally, the AI function network element further indicates, to the base station and the LMF, at least one of the reference data set, the loss function, or the first threshold corresponding to each reference model. Optionally, the loss function and/or the first threshold corresponding to each reference model are/is agreed on in the protocol. Optionally, the W reference models correspond to a same loss function and/or a same first threshold.

Optionally, operation S1502: The base station performs model update training based on the first reference model and the first reference data set, to obtain an updated channel feature extraction model.

The first reference data set includes a plurality of pieces of training data and a label corresponding to each piece of training data. For descriptions of the training data and the label, refer to the corresponding descriptions in FIG. 12. As shown in FIG. 14A, the base station obtains the updated channel feature extraction model through training by using the model training method described in operation S1203. A difference between operations S1502 and S1203 is similar to a difference between operations S1302 and S603. Details are not described herein again.

Optionally, operation S1503: The LMF performs model update training based on the first reference model and the first reference data set, to obtain an updated channel feature extraction model.

The first reference data set includes a plurality of pieces of training data and a label corresponding to each piece of training data. For descriptions of the training data and the label, refer to the corresponding descriptions in FIG. 12. As shown in FIG. 14B, the LMF obtains the updated channel feature extraction model through training by using the model training method described in operation S1203. A difference between operations S1503 and S1203 is similar to a difference between operations S1303 and S603. Details are not described herein again.

Operation S1504: The base station extracts a channel feature by using the channel feature extraction model. Operation S1505: The base station sends the channel feature to the LMF.

In this operation, if S1502 is not performed, the channel feature extraction model is the first reference channel feature extraction model; or if S1502 is performed, the channel feature extraction model is the updated channel feature extraction model.

Specific implementations of S1304 and S1305 are similar to the corresponding descriptions in FIG. 12. Details are not described herein again.

Operation S1506: The LMF determines the positioning information of the UE by using a positioning information obtaining model.

In this operation, if S1503 is not performed, the positioning information obtaining model is the first reference positioning information obtaining model; or if S1503 is performed, the positioning information obtaining model is the updated positioning information obtaining model. A specific implementation of S1506 is similar to the corresponding descriptions in FIG. 12. Details are not described herein again.

It may be understood that, to implement the functions in the foregoing method, the base station, the UE, the LMF, and the AI function network element include corresponding hardware structures and/or software modules for performing the functions. A person skilled in the art should be easily aware that, with reference to units and method steps in the examples described in this application, this application can be implemented by hardware or a combination of hardware and computer software. Whether a function is performed by hardware or hardware driven by computer software depends on particular application scenarios and design constraints of the technical solutions.

FIG. 16 and FIG. 17 are schematics of structures of possible communication apparatuses according to the present disclosure. These communication apparatuses may be configured to implement functions of the base station, the UE, the LMF, and the AI function network element in the foregoing methods, and therefore can also implement beneficial effects of the foregoing methods.

As shown in FIG. 16, a communication apparatus 900 includes a processing unit 910 and a transceiver unit 920. The communication apparatus 900 is configured to implement the method shown in FIG. 6, FIG. 12, FIG. 13, or FIG. 15.

When the communication apparatus 900 is configured to implement a function of the UE in the method shown in FIG. 6 or FIG. 13, the transceiver unit 920 is configured to send X channel features to the LMF; and the processing unit 910 is configured to obtain the X channel features based on Y channel responses and a channel feature extraction model. X and Y are integers greater than or equal to 1. The X channel features correspond to Y channels between the UE and P base stations, and the Y channel responses are in one-to-one correspondence with the Y channels.

When the communication apparatus 900 is configured to implement a function of the base station in the method shown in FIG. 12 or FIG. 15, the transceiver unit 920 is configured to send E channel features to the LMF, where E is an integer greater than or equal to 1; and the processing unit 910 is configured to obtain, based on each of the E channel responses and a channel feature extraction model, a channel feature corresponding to the channel response. The E channel features correspond to E channels between the UE and the base station.

When the communication apparatus 900 is configured to implement a function of the LMF in the method shown in FIG. 6, FIG. 12, FIG. 13, or FIG. 15, the transceiver unit 920 is configured to receive X channel features, where the X channel features correspond to Y channels between the UE and P base stations, and X and Y are integers greater than or equal to 1; and the processing unit 910 is configured to obtain positioning information of the UE based on the X channel features and a positioning information obtaining model.

When the communication apparatus 900 is configured to implement a function of the AI function network element in the method shown in FIG. 6, FIG. 12, FIG. 13, or FIG. 15, the transceiver unit 920 is configured to receive training data, and the processing unit 910 is configured to obtain a channel feature extraction model and a positioning information obtaining model through training based on the training data.

For more detailed descriptions of the processing unit 910 and the transceiver unit 920, refer to the related descriptions in the method shown in FIG. 6, FIG. 12, FIG. 13, or FIG. 15, and directly obtain the descriptions. Details are not described herein again.

As shown in FIG. 17, a communication apparatus 1000 includes a processor 1010 and an interface circuit 1020. The processor 1010 and the interface circuit 1020 are coupled to each other. It may be understood that the interface circuit 1020 may be a transceiver, a pin, or an input/output interface. Optionally, the communication apparatus 1000 may further include a memory 1030, configured to store at least one of the following: instructions executed by the processor 1010, input data needed by the processor 1010 to run the instructions, or data generated after the processor 1010 runs the instructions.

When the communication apparatus 1000 is configured to implement the foregoing method, the processor 1010 is configured to implement a function of the foregoing processing unit 910, and the interface circuit 1020 is configured to implement a function of the foregoing transceiver unit 920.

When the communication apparatus is a chip used in a UE, the UE chip implements a function of the UE in the foregoing method. The UE chip receives information from another module (for example, a radio frequency module or an antenna) in the UE, where the information is sent by a base station, an LMF, an AI function network element, or the like to the UE. Alternatively, the UE chip sends information to another module (for example, a radio frequency module or an antenna) in the UE, where the information is sent by the UE to a base station, an LMF, an AI function network element, or the like.

When the communication apparatus is a module used in a base station, the base station module implements a function of the base station in the foregoing method. The base station module receives information from another module (for example, a radio frequency module or an antenna) in the base station, where the information is sent by a UE, an LMF, or an AI function network element to the base station. Alternatively, the base station module sends information to another module (for example, a radio frequency module or an antenna) in the base station, where the information is sent by the base station to a UE, an LMF, an AI function network element, or the like. The base station module herein may be a baseband chip in the base station, or may be a near-real-time RIC, a CU, a DU, or another module. The near-real-time RIC, the CU, and the DU herein may be a near-real-time RIC, a CU, and a DU in an O-RAN architecture.

When the communication apparatus is used in an LMF module, the LMF module implements a function of the LMF in the foregoing method. The LMF module receives information from another module (for example, a radio frequency module or an antenna) in the LMF, where the information is sent by a UE, a base station, or, an AI function network element to the base station. Alternatively, the LMF module sends information to another module (for example, a radio frequency module or an antenna) in the LMF, where the information is sent by the LMF to a UE, a base station, an AI function network element, or the like.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in the present disclosure. The general-purpose processor may be a microprocessor, any conventional processor, or the like. The steps of the methods in the present disclosure may be directly performed by a hardware processor, or may be performed by a combination of hardware in the processor and a software module.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

A method in this application may be wholly or partially implemented by software, hardware, firmware, or any combination thereof. When the software is used to implement the method, the method may be wholly or partially implemented in a form of a computer program product. The computer program product includes one or more computer programs or instructions. When the computer programs or instructions are loaded and executed on a computer, the processes or functions in this application are wholly or partially performed. The computer may be a general-purpose computer, a dedicated computer, a computer network, an access network device, a terminal device, a core network device, an AI function network element, or another programmable apparatus. The computer programs or instructions may be stored in a computer-readable storage medium, or may be transmitted from a computer-readable storage medium to another computer-readable storage medium. For example, the computer programs or instructions may be transmitted from a web site, computer, server, or data center to another web site, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A communication method, comprising:

   sending X channel features to a location management function LMF, wherein
   the X channel features correspond to Y channels of a terminal device, the X channel features are obtained by using a channel feature extraction model, an input of the channel feature extraction model is determined based on Y channel responses, the Y channel responses are in one-to-one correspondence with the Y channels, and X and Y are integers greater than or equal to 1.

2. The method according to claim 1, wherein X is less than or equal to Y, and/or a total dimension of the X channel features is less than a total dimension of the Y channel responses.

3. The method according to claim 1 or 2, wherein
   the X channel features are used to determine an input of a positioning information obtaining model, and an output of the positioning information obtaining model comprises positioning information of the terminal device.

4. The method according to claim 3, wherein

the positioning information indicates location information of the terminal device; or

the positioning information indicates at least one of the following of the Y channels: a channel type, a first path location, or a relative azimuth of the terminal device.

5. A communication method, comprising:

sending E channel features to a location management function LMF, wherein E is an integer greater than or equal to 1; and

the E channel features correspond to E channels between a terminal device and an access network device, each of the E channel features is obtained by using a channel feature extraction model, an input of the channel feature extraction model is determined based on a channel response, and the channel response corresponds to a channel corresponding to the channel feature.

6. The method according to claim 5, wherein a dimension of the channel feature is less than a dimension of the channel response.

7. The method according to claim 5 or 6, wherein
the E channel features are used to determine an input of a positioning information obtaining model, and an output of the positioning information obtaining model comprises positioning information of the terminal device.

8. The method according to claim 7, wherein

the positioning information indicates location information of the terminal device; or

the positioning information indicates at least one of the following of the E channels: a channel type, a first path location, or a relative azimuth of the terminal device.

9. The method according to claim 4 or 8, wherein at least one of the channel type, the first path location, or the relative azimuth of the terminal device is used to determine the location information of the terminal device.

10. The method according to any one of claims 1 to 9, wherein the method further comprises:
receiving information about the channel feature extraction model.

11. The method according to any one of claims 1 to 10, wherein the method further comprises:
determining the channel feature extraction model based on a first reference model, wherein the first reference model comprises a first reference channel feature extraction model and a first reference positioning information obtaining model.

12. The method according to claim 11, wherein when the channel feature extraction model and the first reference positioning information obtaining model are used in a matched manner, a value of a loss function is less than or less than or equal to a first threshold.

13. A communication method, comprising:

receiving X channel features, wherein the X channel features correspond to Y channels of a terminal device, and X and Y are positive integers greater than or equal to 1; and

obtaining positioning information of the terminal device based on the X channel features and a positioning information obtaining model.

14. The method according to claim 13, wherein X is less than or equal to Y, and/or a total dimension of the X channel features is less than a total dimension of Y channel responses.

15. The method according to claim 13 or 14, wherein

the positioning information indicates location information of the terminal device; or

the positioning information indicates at least one of the following of the Y channels: a channel type, a first path location, or a relative azimuth of the terminal device.

16. The method according to claim 15, further comprising:

determining the location information of the terminal device based on at least one of the channel type, the first path location, or the relative azimuth of the terminal device.

17. The method according to any one of claims 13 to 16, wherein the method further comprises:
receiving information about the positioning information obtaining model.

18. The method according to any one of claims 13 to 16, wherein the method further comprises:
determining the positioning information obtaining model based on a first reference model, wherein the first reference model comprises a first reference channel feature extraction model and a first reference positioning information obtaining model.

19. The method according to claim 18, wherein when the positioning information obtaining model and the first reference channel feature extraction model are used in a matched manner, a value of a loss function is less than or less than or equal to a first threshold.

20. The method according to any one of claims 13 to 19, wherein the method further comprises:
sending information about a channel feature extraction model, wherein an output of the channel feature extraction model comprises the channel feature.

21. A communication method, comprising:

receiving a training data set, wherein each piece of training data in the training data set indicates Y channel responses and Y pieces of positioning information of Y channels of a terminal device, and the Y channel responses are in one-to-one correspondence with the Y pieces of positioning information; and
obtaining a channel feature extraction model and a positioning information obtaining model through training based on the training data set, wherein an input of the channel feature extraction model is determined based on at least one of the Y channel responses, and an input of the positioning information obtaining model is determined based on an output of the channel feature extraction model.

22. A communication apparatus, configured to implement the method according to any one of claims 1 to 12.

23. A communication apparatus, comprising a processor and a memory, wherein the processor is coupled to the memory, and the processor is configured to implement the method according to any one of claims 1 to 12.

24. A communication apparatus, configured to implement the method according to any one of claims 13 to 20.

25. A communication apparatus, comprising a processor and a memory, wherein the processor is coupled to the memory, and the processor is configured to implement the method according to any one of claims 13 to 20.

26. A communication apparatus, configured to implement the method according to claim 21.

27. A communication system, comprising the communication apparatus according to claim 22 or 23, and the communication apparatus according to claim 24 or 25;

comprising the communication apparatus according to claim 22 or 23, and the communication apparatus according to claim 26;
comprising the communication apparatus according to claim 24 or 25, and the communication apparatus according to claim 26; or
comprising the communication apparatus according to claim 22 or 23, the communication apparatus according to claim 24 or 25, and the communication apparatus according to claim 26.

28. A computer-readable storage medium, wherein the computer-readable storage medium stores instructions; and when the instructions are run on a computer, the computer is enabled to perform the method according to any one of claims 1 to 12, or the method according to any one of claims 13 to 20, or the method according to claim 21.

29. A computer program product, comprising instructions, wherein when the instructions are run on a computer, the computer is enabled to perform the method according to any one of claims 1 to 12, or the method according to any one of claims 13 to 20, or the method according to claim 21.

FIG. 1

FIG. 2

FIG. 3A

FIG. 3B

FIG. 3C

FIG. 3D

FIG. 3E

FIG. 4

FIG. 5A

FIG. 5B

FIG. 6

Base
station 1

Base
station 2

Reference
signal 1

Reference
signal 2

Reference
signal 3

Base
station 3

FIG. 7A

Base
station 1

Base
station 2

Reference
signal 1

Reference
signal 2

Reference
signal 3

Base
station 3

FIG. 7B

FIG. 8A

FIG. 8B

EP 4 426 024 A1

Training data
in a training
data set

Channel response
1, ..., channel
response T

Channel
feature
extraction
model

Channel
feature 1

⋮

⋮

Channel response
(Q–1)*T+1, ...,
channel response
Q*T

Channel
feature
extraction
model

Channel
feature Q

Positioning
information
obtaining
model

Does a loss
function meet
a requirement?

No

Yes

Obtain the
model

FIG. 8C

Channel
response 1 → Channel feature
extraction model → Channel
feature 1

⋮              ⋮

Channel
response Y → Channel feature
extraction model → Channel
feature Y

Positioning
information
obtaining model → Positioning
information

FIG. 9A

Channel
response 1 →

⋮

Channel
response Y →

Channel feature
extraction model → Channel
feature → Positioning
information
obtaining model → Positioning
information

FIG. 9B

Channel response
1, ..., channel
response T → Channel feature
extraction model → Channel
feature 1

⋮              ⋮

Channel response
(Q–1)*T+1, ...,
channel response
Q*T → Channel feature
extraction model → Channel
feature Q

Positioning
information
obtaining model → Positioning
information

FIG. 9C

Base
station 1

t1

Base
station 2

t2

Location
of a UE

Curve 1, t1–t3

t3

Measurement
error

Base
station 3

Curve 1, t1–t2

FIG. 10

$d_2$

$d_3$, NLOS

Trees — $d_1$, LOS

FIG. 11

FIG. 12

```
┌──────────┐                              ┌──────────┐
│    UE    │                              │   LMF    │
└────┬─────┘                              └────┬─────┘
     │                                         │
┌────┴─────────────────────────────────────────┴────┐
│     S1301: Determine a first reference model       │
└────┬─────────────────────────────────────────┬────┘
     │                                         │
┌────┴──────────┐                    ┌──────────┴──────┐
│ S1302: Model  │                    │  S1303: Model   │
│ update training│                   │ update training │
└────┬──────────┘                    └──────────┬──────┘
     │                                         │
┌────┴──────────┐                              │
│ S1304: Channel│                              │
│feature extraction│                           │
└────┬──────────┘                              │
     │                                         │
     │   S1305: Channel feature                │
     │────────────────────────────────────────▶│
     │                                         │
     │                        ┌─────────────────┴────────────┐
     │                        │ S1306: Determine positioning  │
     │                        │   information of the UE        │
     │                        └─────────────────┬────────────┘
     │                                         │
```

FIG. 13

FIG. 14A

FIG. 14B

| Base station | | LMF |
|---|---|---|
| | S1501: Determine a first reference model | |
| S1502: Model update training | | S1503: Model update training |
| S1504: Channel feature extraction | | |
| | S1505: Channel feature → | |
| | | S1506: Determine positioning information of a UE |

FIG. 15

Communication apparatus 900

Processing unit 910

Transceiver unit 920

FIG. 16

Communication apparatus 1000

Processor 1010

Interface circuit 1020

Memory 1030

FIG. 17

<div align="center">**INTERNATIONAL SEARCH REPORT**</div>

| International application No. |
|---|
| **PCT/CN2022/132679** |

| **A.** | **CLASSIFICATION OF SUBJECT MATTER** |
|---|---|

H04W 64/00(2009.01)i

According to International Patent Classification (IPC) or to both national classification and IPC

| **B.** | **FIELDS SEARCHED** |
|---|---|

Minimum documentation searched (classification system followed by classification symbols)

H04W; H04B; H04L; G01S

Documentation searched other than minimum documentation to the extent that such documents are included in the fields searched

Electronic data base consulted during the international search (name of data base and, where practicable, search terms used)

CNPAT; WPI; EPODOC; 3GPP: 学习, 训练, 人工智能, 神经网络, 信道, 响应, 信道特征, 定位管理功能, 定位, LMF, learning, training, artificial intelligence, AI, neural networks, channel?, response?, channel feature?, Location Management Function, position+, location

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 113543305 A (VIVO COMMUNICATION TECHNOLOGY CO., LTD.) 22 October 2021 (2021-10-22)<br>description, paragraphs 0033-0061 | 1-29 |
| A | WO 2021211399 A1 (QUALCOMM INC.) 21 October 2021 (2021-10-21)<br>entire document | 1-29 |
| A | WO 2021104403 A1 (HUAWEI TECHNOLOGIES CO., LTD.) 03 June 2021 (2021-06-03)<br>entire document | 1-29 |
| A | US 10908299 B1 (HUAWEI TECHNOLOGIES CO., LTD.) 02 February 2021 (2021-02-02)<br>entire document | 1-29 |
| A | WO 2021115687 A1 (NOKIA TECHNOLOGIES OY) 17 June 2021 (2021-06-17)<br>entire document | 1-29 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2023** | **17 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT<br>Information on patent family members | | | International application No.<br>**PCT/CN2022/132679** | | | |
|---|---|---|---|---|---|---|

| Patent document<br>cited in search report | | | Publication date<br>(day/month/year) | Patent family member(s) | | Publication date<br>(day/month/year) |
|---|---|---|---|---|---|---|
| CN | 113543305 | A | 22 October 2021 | WO 2021213376 A1 | | 28 October 2021 |
| WO | 2021211399 | A1 | 21 October 2021 | US 2021321221 A1 | | 14 October 2021 |
| | | | | CN 115398443 A | | 25 November 2022 |
| WO | 2021104403 | A1 | 03 June 2021 | US 2021160712 A1 | | 27 May 2021 |
| | | | | US 2022272551 A1 | | 25 August 2022 |
| | | | | EP 4055890 A1 | | 14 September 2022 |
| | | | | CN 114747257 A | | 12 July 2022 |
| US | 10908299 | B1 | 02 February 2021 | CN 114342457 A | | 12 April 2022 |
| | | | | EP 4022964 A1 | | 06 July 2022 |
| | | | | WO 2021037231 A1 | | 04 March 2021 |
| WO | 2021115687 | A1 | 17 June 2021 | CN 114868437 A | | 05 August 2022 |
| | | | | EP 4074112 A1 | | 19 October 2022 |

Form PCT/ISA/210 (patent family annex) (January 2015)

**REFERENCES CITED IN THE DESCRIPTION**

**Patent documents cited in the description**

- CN 202111367563